Europäisches Patentamt

European Patent Office

Office européen des brevets

(11) Veröffentlichungsnummer: **0 097 958**
**B1**

(12) **EUROPÄISCHE PATENTSCHRIFT**

(45) Veröffentlichungstag der Patentschrift:
08.10.86

(51) Int. Cl.⁴: **H 02 M 5/27**

(21) Anmeldenummer: 83106294.8

(22) Anmeldetag: 28.06.83

(54) Verfahren und Vorrichtung zum Unterdrücken eines im Ausgangsgrössensystem eines Stellgliedes enthaltenen Gegensystems und Anwendung bei einem Direktumrichter mit Drehstromausgang.

(30) Priorität: 29.06.82 DE 3224320
29.06.82 DE 3224222
29.06.82 DE 3224238
30.09.82 DE 3236318

(43) Veröffentlichungstag der Anmeldung:
11.01.84 Patentblatt 84/2

(45) Bekanntmachung des Hinweises auf die Patenterteilung:
08.10.86 Patentblatt 86/41

(84) Benannte Vertragsstaaten:
AT CH DE LI SE

(56) Entgegenhaltungen:
EP - A - 0 045 440
US - A - 3 262 044

(73) Patentinhaber: Siemens Aktiengesellschaft Berlin und München, Wittelsbacherplatz 2, D-8000 München 2 (DE)

(72) Erfinder: Neupauer, Helmut, Dr., Heiligenlohstrasse 3, D-8520 Erlangen (DE)

## Beschreibung

Die Erfindung betrifft ein Verfahren und eine Vorrichtung zum Unterdrücken eines im Ausgangsgrössensystem eines Stellgliedes enthaltenen Gegensystems. Die Erfindung betrifft ferner die Anwendung des Verfahrens zum Unterdrücken des Gegensystems bei einem Stellglied mit Drehstromausgang, insbesondere einem Drehstrom-Drehstrom-Direktumrichter zur Speisung einer unsymmetrischen Last.

Ein als bevorzugtes Ausführungsbeispiel betrachteter Direktumrichter arbeitet ohne Zwischenstromkreis und enthält für jeden Umrichterausgang eine gesteuerte Umrichterbrückenschaltung, durch deren Ansteuerung aus dem zeitlichen Verlauf der Umrichtereingangsspannungen derartige Abschnitte herausgeschnitten und auf den Ausgang geschaltet werden, dass am Ausgang eine durch einen Sollwert vorgegebene Spannung der gewünschten Amplitude und Frequenz entsteht. Um nach jeder Halbwelle des Ausgangsstromes eine Umkehrung der Stromflussrichtung zu ermöglichen, sind die Umrichterbrückenschaltungen als Umkehrumrichter ausgebildet, d.h. sie enthalten jeweils zwei antiparallele Umrichterbrücken, von denen je nach der jeweiligen Stromführungsrichtung die eine angesteuert und die andere gesperrt ist. Für einen ordnungsgemässen Betrieb eines derartigen Direktumrichters muss die Umschaltung zwischen den beiden antiparallelen Brücken jeweils möglichst beim Nulldurchgang der Stromgrundschwingung erfolgen.

Der Betrieb eines Umrichters erzeugt stets die Gefahr, dass im Ausgangsstrom und/oder Ausgangsspannung derartige Oberschwingungen auftreten, die in der angeschlossenen Last zu erheblichen Resonanzen und einer unerträglichen Belastung führen können. Auch im Umrichter selbst und im speisenden Netz können dadurch unerwünschte Rückwirkungen erzeugt werden. Dabei kann es wünschenswert oder sogar erforderlich sein, derartige Oberschwingungen herauszufiltern, um durch Aufschalten eines entsprechenden Kompensationssignals auf die Führungsgrösse des Messwertsystems oder einen anderen Eingriff in die Steuerung oder Regelung der Anlage eine derartige Schwingung zu unterdrücken.

Für die Ausnutzung des Umrichters ist es vorteilhaft, wenn an den Umrichterausgängen eine trapezförmige Ausgangsspannung erzeugt wird (z.B. nach der DE-OS 3 029 319). Eine derartige trapezförmige Spannung enthält eine ausgeprägte Oberschwingung dritter Ordnung, die sich jedoch in der verketteten Spannung bei symmetrischer Last theoretisch vollkommen heraushebt. Für die Speisung einer unsymmetrischen Last ist es zur Verminderung von Leistungspulsationen im Umrichter und entsprechender Rückwirkungen auf das speisende Netz vorteilhaft, an den Umrichterausgang eine Symmetriereinrichtung anzuschliessen, so dass Umrichter und Netz nunmehr gleichmässig belastet werden. Ungenauigkeiten beim Betrieb der Symmetriereinrichtung bewirken dabei, dass die ausgeprägte Oberschwingung dritter Ordnung sich nicht vollständig heraushebt. Da diese Symmetriereinrichtung auf die 50 Hz-Speisespannung abgestimmte Saugkreise enthält, kommt es im Gegenteil zu hohen Oberschwingungsströmen dieser Frequenz. Diese Ströme belasten die Saugkreise noch zusätzlich zu den Strömen, welche in der Symmetriereinrichtung selbst erzeugt werden. Ausserdem schliesst sich dieser Oberschwingungsstrom über das speisende Netz. Es ist daher insbesondere bei einem Drehstrom-Drehstrom-Umrichter zur Speisung einer unsymmetrischen, mittels einer Symmetriereinrichtung symmetrierten Last vorteilhaft, wenn eine Oberschwingung einer bestimmten Ordnungszahl, vor allem der Ordnungszahl 3, erfasst und unterdrückt werden kann.

Obwohl die störenden hohen Oberschwingungsströme ursächlich mit den Eigenschaften der unsymmetrischen Last und der Symmetriereinrichtung zusammenhängen und in erster Linie die lastseitigen Bauteile unerwünscht stark belasten, können sie gemäss der Erfindung durch einen entsprechenden Eingriff in die Steuerung oder Regelung des Umrichters selbst unterdrückt werden.

Wird für die Führungsgrössen der Ausgangsströme bzw. Ausgangsspannungen ein symmetrisches System vorgegeben, so entsteht nur bei vollkommen symmetrischer Last ein symmetrisches System von Ausgangsströmen und Ausgangsspannungen. Eine unsymmetrische Last kann durch Verwendung einer Symmetriereinrichtung auf der Lastseite des Umrichters symmetrisiert werden. Dabei ist der Betrieb der Symmetriereinrichtung verhältnismässig einfach, wenn das Spannungs-Istwertsystem am Direktumrichterausgang, d.h. am Eingang der Symmetriereinrichtung, symmetrisch ist. Trotz symmetrischem Führungsgrössensystem ist dies wegen Ungenauigkeiten in den Steuersätzen, verschieden lückendem Strom an den einzelnen Umrichterausgängen und anderen Fehlerquellen jedoch im allgemeinen nicht gegeben. Daher tritt in der Praxis kein vollkommen symmetrisches System von Ausgangsspannungen auf, sondern es bildet sich ein Spannungsgegensystem am Umrichterausgang aus. Dieses Spannungsgegensystem seinerseits führt zu einem Gegensystem und einem zusätzlichen Mitsystem der Lastströme. Um trotzdem ein symmetrisches System von Lastströmen zu erhalten, kann zwar in die Steuerung der Symmetriereinrichtung eingegriffen werden, jedoch ist dies sehr aufwendig. Gelingt es, das Spannungssystem an den Umrichterausgängen phasenrichtig und amplitudengetreu zu erfassen, so kann das Spannungsgegensystem bereits am Umrichterausgang durch einen entsprechenden gegensteuernden Eingriff in die Umrichtersteuerung kompensiert werden, ohne dass in die Regelung der Symmetriereinrichtung eingegriffen werden muss.

Da selbst bei einer Unterdrückung der Stromoberschwingungen noch in den Grundschwingungen der Ausgangsströme ein Stromgegensystem enthalten ist, das zur Ausbildung eines entsprechenden Spannungsgegensystems führt, ist die erwähnte Unterdrückung des Spannungsgegensystems durch Eingriff in die Umrichtersteuerung auch in diesem Fall noch vorteilhaft.

Die Erfindung geht nun von der grundlegenden Aufgabe aus, aus einem System von drei Messwerten an den Ausgängen eines Stellgliedes, z.B. den Ausgangsströmen $i_1$, $i_2$, $i_3$ eines Direktumrichters mit $i_1 + i_2 + i_3 = i_0 = 0$ («nullpunktfreies System»), ein darin enthaltenes Gegensystem zu erkennen und zu unterdrücken. Für eine bestimmte Oberschwingung ermöglicht diese Oberschwingungs-Gegensystemunterdrückung in Verbindung mit einer in analoger Weise durchgeführten Mitsystemunterdrückung auch eine vollkommene Oberschwingungsunterdrückung. Diese Aufgabe wird erfindungsgemäss durch ein Verfahren mit den Merkmalen des Anspruchs 1 gelöst.

Handelt es sich beispielsweise um einen Umrichter, dessen Ausgänge an eine Sternschaltung mit geerdetem Sternpunkt angeschlossen sind, so enthalten die Messwerte eine Nullkomponente $i_0$. In diesem Fall kann durch Übergang von den Messwerten $i_1$, ... auf die Messwerte $i_1 - \frac{1}{3}i_0$, $i_2 - $ ... das Messwertsystem als additive Überlagerung beider Systeme verstanden werden. Auch ein einzelner Messwert, z.B. die Nullkomponente $i_0$, kann aber durch Vorgabe eines fiktiven zweiten Messwertes wie ein nullpunktfreies System behandelt werden. Besitzt das Stellglied noch mehr Ausgänge, so können auch in diesem Fall die Messwerte als Überlagerung mehrerer nullpunktfreier Systeme behandelt werden.

Vorteilhafte Anwendungen, geeignete Vorrichtungen zur Durchführung sowie Weiterbildungen der Erfindung sind in den weiteren Ansprüchen gekennzeichnet und werden anhand von mehreren Ausführungsbeispielen und Figuren näher erläutert. Dabei zeigt:

Fig. 1 einen Drehstrom-Drehstrom-Direktumrichter zur Speisung einer angeschlossenen Last,

Fig. 2 Vektordiagramme, um die Zusammensetzung der Messwerte zu einem Istwertvektor und die Aufspaltung des Istwertverktors in einen Mitsystemvektor und einem Gegensystemvektor zu verdeutlichen,

Fig. 3 eine schematische Darstellung des Vorganges zum Ermitteln der Oberschwingung 3. Ordnung eines einzelnen Messwertes,

Fig. 4 eine vorteilhafte Weiterbildung von Fig. 3 zu einer Vorrichtung zur Unterdrückung eines Gegensystems,

Fig. 5 die Bildung der 3. harmonischen Schwingung eines dreiphasigen Messwertsystems durch Weiterbildung von Fig. 3 und Fig. 4,

Fig. 6 die Ermittlung der Grundschwingung analog zu Fig. 5.,

Fig. 7 eine einphasige Last mit paralleler Symmetriereinrichtung für den Umrichter nach Fig. 1,

Fig. 8 eine Vorrichtung zum Unterdrücken der dritten harmonischen Schwingung eines dreiphasigen, stromgeregelten Stellgliedes, beispielsweise des Umrichters nach Fig. 1,

Fig. 9 die Zusammenschaltung der Vorrichtungen nach den Figuren 4, 6 und 8 zu einer Regelschaltung für den Umrichter nach Fig. 1 und Fig. 10 einen Sollwertgeber.

Bevorzugte Anwendung der Erfindung ist eine Regelanordnung für einen Drehstrom-Drehstrom-Direktumrichter zur Speisung einer unsymmetrischen Last. Bei hohen Leistungen bewirkt eine unsymmetrische Last eine unerträgliche Rückwirkung auf das speisende Drehstromnetz, weshalb der Last eine elektronische Symmetriereinrichtung zum Erzeugen eines symmetrischen Systems von Umrichter-Ausgangsströmen parallelgeschaltet ist. Eine Regeleinrichtung bildet aus einer Führungsgrösse mit vorgegebener Sollfrequenz und aus Messwerten für die Ströme und/oder Spannungen an den Umrichterausgängen Stellgrössen zum Erzeugen eines symmetrischen Systems von Umrichter-Ausgangsspannungen. Ferner erfordert ein derartiger Direktumrichter eine Umschalteinrichtung, die jeweils die auf einen Umrichterausgang arbeitenden antiparallelen Gleichrichterbrücken beim Nulldurchgang der Stromgrundschwingung umschaltet. Hierzu ist der Umschalteinrichtung ein aus Strommesswerten an den Umrichterausgängen abgeleitetes Umsteuersignal zugeführt.

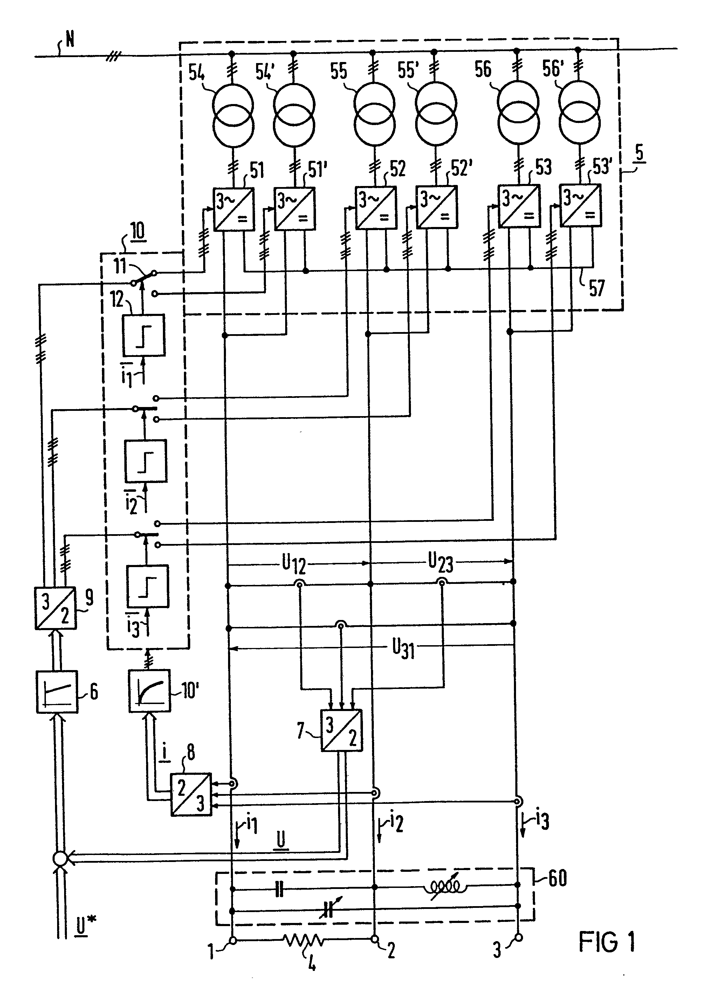

In Fig. 1 ist ein derartiger Drehstrom-Drehstrom-Direktumrichter 5 mit einer derartigen, im wesentlichen bekannten Regelanordnung dargestellt. Die Drehstromausgänge 1, 2, 3 sind an eine Symmetriereinrichtung 60, die zwei Ausgänge 1, 2 auch an eine Last 4 angeschlossen. Dabei ist jedem Drehstromausgang eine an das Drehstromnetz N angeschlossene Gleichrichterbrücke 51, 52, 53 zugeordnet, deren anderer Ausgang zu einem Sternpunkt 57 geführt ist, so dass durch eine entsprechende Zündung der Gleichrichterventile geeignete zeitliche Abschnitte der verketteten Spannungen des Netzes herausgeschnitten und an der Ausgangsseite zu einer Halbwelle niedrigerer Frequenz zusammengesetzt werden können. Da die auf die jeweiligen Ausgänge 1, 2, 3 arbeitenden Gleichrichterbrücken 51, 52, 53 jeweils nur in einer Richtung Strom führen können, ist jeder dieser Gleichrichterbrücken eine weitere Gleichrichterbrücke 51', 52', 53' zur Erzeugung der anderen Halbwelle antiparallel geschaltet. Die Ankoppelung der Brückenschaltungen an das Versorgungsnetz N geschieht über entsprechende Stromrichtertransformatoren 54, 54', ... 56'.

Der hier dargestellte Direktumrichter wird geregelt betrieben, indem einer Regeleinheit 6 Sollwerte für seine Ausgangsspannung zugeführt werden, z.B. ein durch die beiden Komponenten $U^* \cos \omega^* t$, $U^* \sin \omega^* t$ beschriebener Spannungsvollvektor $\underline{U}^*$, der mit einem entsprechenden Istspannungsvektor $\underline{U}$ verglichen ist, der von einem 3/2-Koordinatenwandler 7 aus den entsprechenden, mittels zwischen den Ausgängen 1, 2 und 3 angeordneten Messwandlern erfassten Mess-

spannungen $U_{12}$, $U_{23}$, $U_{31}$ gebildet wird. Ein gleichartiger Koordinatenwandler 8 kann auch für die drei Ausgangsströme $i_1$, $i_2$, $i_3$ vorgesehen sein, um z.B. eine Stromeinprägung anstelle der Spannungseinprägung durchzuführen.

Da ein Vektor stets zwei Bestimmungsgrössen (z.B. seine kartesischen oder polaren Koordinaten) besitzt, stellt jedes vektorielle Signal ein Signalpaar dar, das über eine Signal-Doppelleitung (in den Figuren durch Doppelpfeile dargestellt) übertragen wird. Entsprechend ist das für die Regeleinheit 6 vorgesehene Regelvergleichsglied zur komponentenweisen Subtraktion des Istvektors $\underline{U}$ vom Sollvektor $\underline{U}^*$ ausgebildet, sie enthält also zwei Subtraktionsstellen, deren Ausgangssignale den Differenzvektor darstellen und der ebenfalls aus zwei Einzelreglern aufgebauten Regeleinheit 6 zugeführt sind. Deren Ausgangssignale stellen einen Steuervektor dar, der über einen 2/3-Koordinatenwandler 9 in entsprechende Stellgrössen (Steuerspannungen) und über (nicht dargestellte) Steuersätze in Zündbefehle für die jeweiligen Umkehrumrichter des Direktumrichters umgewandelt werden kann.

Dadurch wird dem Direktumrichter die Ausgangsspannung eingeprägt. Ebenso kann aber auch der Ausgangsstrom eingeprägt werden. Der entsprechende Sollvektor, im Beispiel also der Sollspannungsvektor $\underline{U}^*$, kann zur Erzeugung eines symmetrischen Ausgangssystems als ein mit der gewünschten Ausgangsfrequenz $\omega^*$ umlaufender Vektor konstanten Betrages vorgegeben werden. Im Einzelfall ist es häufig vorteilhafter, zuerst die Umwandlung des kartesisch vorgegebenen Sollvektors in drei Sollwerte $U^*_{12}$, $U^*_{23}$, $U^*_{31}$ vorzunehmen und diese Sollwerte dann mit den entsprechenden Istwerten zu vergleichen und jeweils einer eigenen, dem auf den entsprechenden Ausgang arbeitenden Umkehrstromrichter zugeordnete Regeleinrichtung aufzuschalten.

Eine Kommandostufe 10 sorgt als Umschalteinrichtung dafür, dass die Steuerspannung bzw. die Zündimpulse für die einzelnen Umkehrumrichter nur auf diejenige der beiden antiparallelen Brückenschaltungen des entsprechenden Umkehrumrichters gegeben werden, deren Stromführungsrichtung der Polarität der Grundschwingung des Ausgangsstromes entspricht. Die andere Brückenschaltung bleibt dabei gesperrt. Hier entsteht das Problem, die Umschaltzeitpunkte aus dem Verlauf des Umrichterstromes so zu bestimmen, dass sie mit den Nulldurchgängen der Stromgrundschwingung bzw. eines entsprechenden Umsteuersignals zusammenfallen.

In Fig. 1 ist dies dadurch schematisch dargestellt, dass der Kommandostufe 10 die mittels eines Filters 10' aus dem Iststromvektor $\underline{i}$ ermittelten Umsteuersignale $i_1$, $i_2$, $i_3$ vorgegeben werden, deren Nulldurchgänge mittels Grenzwertmeldern 12 festgestellt werden, um damit entsprechende Umschalter 11 zu steuern.

Das mit der Erfindung zu lösende Problem liegt dabei darin, dass z.B. die Stromgrundfrequenz an sich zwar durch übliche Filter ermittelt werden kann, wobei aber die Schwingung selbst eine lastabhängige Phasenverschiebung erleidet. Die Stromgrundschwingung soll daher durch eine Schaltung ermittelt werden, die entweder überhaupt keine Dynamikglieder enthält oder solche Glieder an einer Stelle verwendet, wo sie nicht zu einer Phasenverschiebung führen.

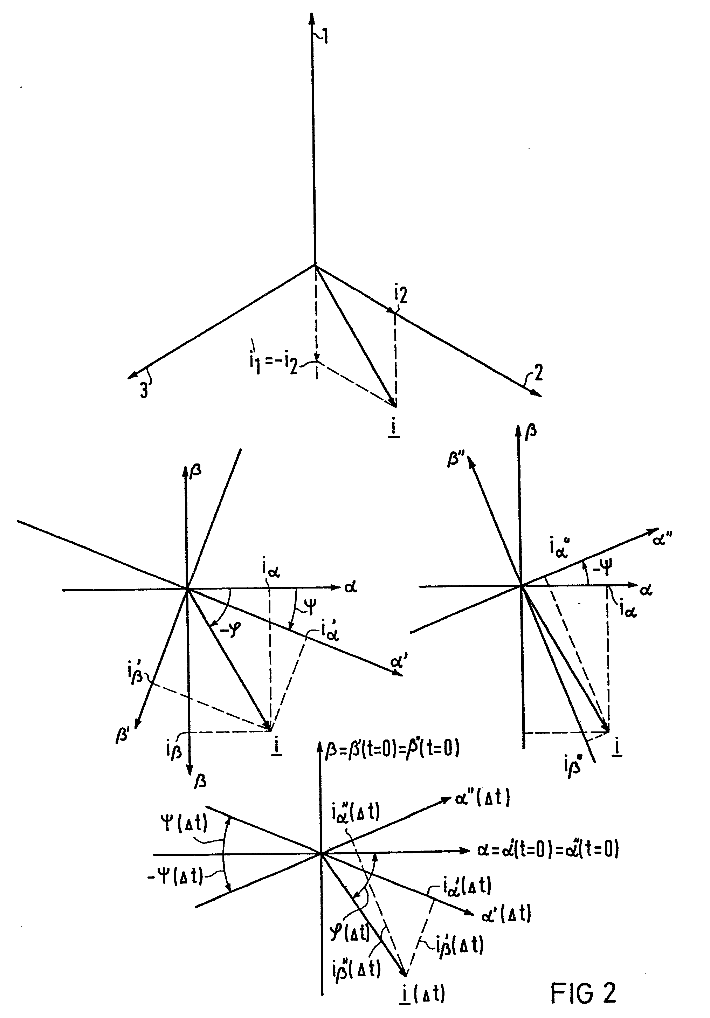

Zum Verständnis der Koordinatenwandler und weiterer bei der Erfindung verwendeter Rechenbausteine sei das obere Diagramm in Fig. 2 betrachtet. In einem raumfesten Bezugssystem sind den drei Ausgängen 1, 2, 3 drei gegeneinander um 120° verschobene, feste Richtungen vorgegeben, die die Richtungen von drei raumfesten Vektoren festlegen. Der Vektorbetrag dieser Vektoren wird durch den Messwert am jeweiligen Ausgang festgelegt. Dadurch werden also z.B. die Vektoren $\underline{i}_1$, $\underline{i}_2$, $\underline{i}_3$ für die Ausgangsstrom-Messwerte $i_1$, $i_2$, $i_3$ (im Beispiel einer einphasigen Last $-i_1 = i_2$, $i_3 = 0$) gebildet. Der 3/2-Koordinatenwandler setzt diese Vektoren nach den Regeln der Vektoraddition zu einem Istwert-Vektor des Systems, dem Laststromvektor $\underline{i}$, zusammen. Dabei gilt die algebraische Verknüpfungsvorschrift:

$$
\begin{aligned}
i_1 &= i_\alpha \\
i_2 &= -\,i_\alpha/2 + i_\beta \cdot \sqrt{3}/2 \qquad\qquad (1)\\
i_3 &= -\,i_\alpha/2 - i_\beta \cdot \sqrt{3}/2,
\end{aligned}
$$

wobei (abgesehen von einem gemeinsamen Proportionalitätsfaktor) $i_\alpha$, $i_\beta$ die Komponenten des resultierenden Vektors $\underline{i}$ bezüglich eines raumfesten orthogonalen Koordinatensystems sind und als das den resultierenden Vektor bestimmende Signalpaar am Ausgang des Koordinatenwandlers abgegriffen werden. Diese algebraische Verknüpfungsregeln ermöglichen auch mittels eines «2/3-Koordinatenwandlers» die Umrechnung eines in orthogonalen Komponenten gegebenen Vektors in einzelne skalare Grössen, die als Länge entsprechender Vektoren drei gegeneinander um 120° versetzten Richtungen zugeordnet sind.

Es sind auch Koordinatenwandler bekannt, die die Umrechnung einer kartesischen Vektordarstellung in Polarkoordinaten gestatten, so dass der resultierende Vektor $\underline{i}$ z.B. auch durch seine Länge i und einen Winkel $\varphi$ beschrieben werden kann. Ähnlich arbeitet auch ein Vektoranalysator, der aus den kartesischen Komponenten $i_\alpha$, $i_\beta$ eines Vektors $\underline{i}$ einerseits den Vektorbetrag i, andererseits ein Winkelsignal erzeugt, das aus dem Signalpaar $i_\alpha/i = \cos\varphi$, $i_\beta/i = \sin\varphi$ besteht und somit die Projektionen eines in Richtung des Vektors $\underline{i}$ weisenden Einheitsvektors auf zwei orthogonale Bezugsachsen $\alpha$, $\beta$ berechnet. In den mittleren Diagrammen von Fig. 2 sind entsprechende raumfeste Bezugsachsen $\alpha$, $\beta$ und der (im Beispiel negative) Winkel für den durch raumfeste Komponenten ($i_\alpha$, $i_\beta$) vorgegebenen Vektor $\underline{i}$ dargestellt.

Ein derartiger Vektoranalysator ist in der deutschen Offenlegungsschrift 2 919 786 zusammen mit einem Vektordreher beschrieben. Ein Vektordreher ermöglicht es, die in einem ersten Bezugssystem gegebenen Komponenten (z.B. $i_\alpha$, $i_\beta$)

in die entsprechenden Komponenten $i_{\alpha'}$, $i_{\beta'}$ eines zweiten Bezugssystems $\alpha'$, $\beta'$ umzurechnen, das gegenüber dem ersten Bezugssystem um einen durch ein eingegebenes Winkelsignal bestimmten Winkel $\psi$ gedreht ist. Besteht das Winkelsignal z.B. aus dem Signalpaar $\cos\psi$, $\sin\psi$, so bildet ein mit $VD_{(-)}$ bezeichneter Vektordreher die neuen Komponenten:

$$i_{\alpha'} = i_\alpha \cdot \cos\psi + i_\beta \sin\psi = i \cos(\varphi-\psi), \qquad (2)$$
$$i_{\beta'} = -i_\alpha \sin\psi + i_\beta \cos\psi = i \sin(\varphi-\psi),$$

die den Projektionen des Vektors $\underline{i}$ auf die Bezugsachsen des um den Winkel $\psi$ gedrehten, neuen Bezugssystems $\alpha'$, $\beta'$ entsprechen. Ein mit $VD_{(+)}$ bezeichneter Vektordreher führt die entsprechende inverse Operation aus:

$$i_{\alpha''} = i_\alpha \cos\psi - i_\beta \sin\psi, \qquad (3)$$
$$i_{\beta''} = i_\alpha \sin\psi + i_\beta \cos\psi,$$

durch die die Komponenten $i_\alpha$, $i_\beta$ bezüglich des Bezugssystems $\alpha$, $\beta$ in die Komponenten $i_{\alpha''}$, $i_{\beta''}$ eines um $-\psi$ gedrehtes Bezugssystems $\alpha''$, $\beta''$ überführt werden. Die mittleren Diagramme von Fig. 2 zeigen die entsprechenden Komponenten $i_{\alpha'}$, $i_{\beta'}$ und $i_{\alpha''}$, $i_{\beta''}$ des Vektors i in zwei gegensinnig um den gleichen Winkel gedrehten Bezugssystemen.

Im unteren Diagramm von Fig. 2 ist der Vektor $\underline{i}$, der im raumfesten Bezugssystem eine veränderliche Länge i (t) und eine veränderliche Richtung $\varphi(t)$ haben kann, bezüglich zweier Koordinatensysteme $\alpha'$, $\beta'$ («Koordinaten-Mitsystem») und $\alpha''$, $\beta''$ («Koordinaten-Gegensystem») dargestellt, die in der Zeit $\Delta t$ gegenüber dem raumfesten Bezugssystem um den Winkel $\psi(\Delta t)$ gegenläufig gedreht sind.

Der Vektor $\underline{i}$ besitzt demnach in dem Koordinaten-Mitsystem die Komponenten $i_{\alpha'}$, $i_{\beta'}$ (Mitsystem-Komponenten) und im Koordinaten-Gegensystem die Komponenten $i_{\alpha''}$, $i_{\beta''}$.

Wird der Umrichterausgangsstrom durch ein symmetrisches System von Spannungssollwerten der Frequenz $\omega^*$ geführt, so kann dem Sollwertsystem der Vektor $\underline{U}^*$ mit den raumfesten orthogonalen Komponenten $U_\alpha^* = U_o^* \cos\omega^* t$, $U_\beta^* = U_o^* \sin\omega^* t$ zugeordnet werden. Die Transformation in ein mit $\omega^*$ umlaufendes Koordinaten-Mitsystem liefert die Komponenten $U^*_{\alpha'} = U_o^*$, $U^*_{\beta'} = 0$, also zeitlich konstante Gleichgrössen, die einen das Führungsgrössensystem beschreibenden, im Koordinaten-Mitsystem ruhenden Vektor («Mitsystemvektor») darstellen. Im entsprechenden Koordinaten-Gegensystem liefert die Transformation die Wechselgrössen $U_{\alpha''}^* = U_o^* \cos 2\omega^* t$, $U_{\beta''}^* = U_o^* \sin 2\omega^* t$. Die zeitlichen Mittelwerte dieser Wechselgrössen verschwinden, da ein symmetrisches System bereits durch den Mitsystemvektor vollständig beschrieben ist.

Ein unsymmetrisches nullkomponentenfreies System besitzt die Vektordarstellung

$$i_\alpha = |i_\alpha| \cdot \cos(\omega t + \varphi_\alpha), \; i_\beta = |i_\beta| \cdot \sin(\omega t + \varphi_\beta). \qquad (4)$$

Die Erfindung nutzt aus, dass die ins Koordinaten-Mitsystem und Koordinaten-Gegensystem transformierten Vektorkomponenten je einen Gleichanteil besitzen, der von einem Wechselanteil überlagert ist:

$$i_{\alpha'} = i' \cos\varphi' + i'' \cos(-2\omega t + \varphi'') \qquad (5)$$
$$i_{\beta'} = i' \sin\varphi' + i'' \sin(-2\omega t + \varphi'')$$
$$i_{\alpha''} = i' \cos(2\omega t + \varphi') + i'' \cos\varphi''$$
$$i_{\beta''} = i' \sin(2\omega t + \varphi') + i'' \sin\varphi''.$$

Die durch die Gleichanteile $i' \cos\varphi'$, $i' \cdot \sin\varphi'$ bzw. $i'' \cos\varphi''$, $i'' \sin\varphi''$ bestimmten Vektoren $\underline{i}'$ «Mitsystem-Vektor» und $\underline{i}''$ («Gegensystem-Vektor») bilden nach Rücktransformation ins raumfeste Bezugssystem und Vektoraddition wieder das ursprüngliche System der Frequenz $\omega$)

$$\underline{i}^* = \overline{\underline{i}'} + \overline{\underline{i}''}. \qquad (6)$$

Für andere Zeitpunkte $t \neq t_o$ (d.h. $U_3^* \neq 0$) ergeben sich naturgemäss Diagramme, die von Fig. 2 abweichen, da die dort gezeichneten Diagramme für ein unsymmetrisches System gelten. Die Transformation (2) liefert mit dem Winkelsignal $\varphi = \omega \cdot t$ für das unsymmetrische System (4) die Zerlegung

$$i_{\alpha'} = i' \cos\varphi' + i'' \cos(-2\omega t + \varphi''), \qquad (7)$$
$$i_{\beta'} = i' \sin\varphi' + i'' \sin(-2\omega t + \varphi''),$$

wobei die Gleichanteile $i' \cos\varphi'$, $i' \sin\varphi'$ die Komponenten des Mitsystemvektors $\underline{i}'$ im Koordinaten-Mitsystem darstellen. Die Transformation (3) liefert dagegen mit

$$i_{\alpha''} = i' \cos(2\omega t + \varphi') + i'' \cos\varphi'',$$
$$i_{\beta''} = i' \sin(2\omega t + \varphi') + i'' \sin\varphi''$$

zwei Grössen, deren Gleichanteile die Komponenten eines im Koordinaten-Gegensystem ruhenden Gegensystem-Vektors $\underline{i}''$ bilden.

Gemäss dem der Erfindung zugrunde liegenden Gedanken lässt sich eine im zeitlichen Verlauf eines Messwertes enthaltene harmonische Schwingung n-ter Ordnung leicht ermitteln, wenn der Messwert von einer Führungsgrösse mit vorgegebener Soll-Frequenz bestimmt ist. Handelt es sich bei dem Messwert um den Momentanwert des Stromes an einem Umrichterausgang und bei der Führungsgrösse um eine entsprechende Sollspannung, so ist die Grundfrequenz des Messwertes durch die Sollfrequenz der Führungsgrösse gegeben; jedoch folgt der Messwert der Führungsgrösse mit einer lastabhängigen Phasenverschiebung und ist von durch den Umrichterbetrieb bedingten Oberschwingungen überlagert.

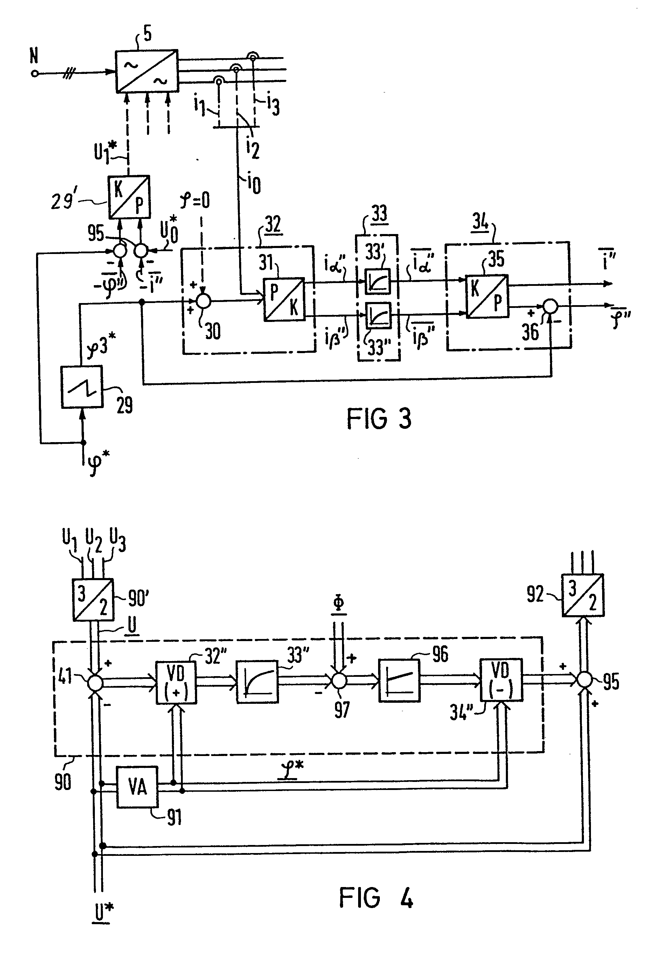

Je nachdem, ob die Grundschwingung oder eine bestimmte Oberschwingung betrachtet wird, ist Ausgangspunkt ein mit dem entsprechenden Vielfachen der Grundschwingung frequenzveränderliches Winkelsignal, das in einem raumfesten Bezugssystem einen Bezugsvektor festlegt, der bei einem für die Stellgliedsteuerung als negativ festgelegten Umlaufsinn eine Koordinatenachse eines rotierenden, (insbesondere kartesischen) Koordinaten-Gegensystems bestimmt. Dies ist in Fig. 3 zunächst für die Nullkomponente $i_0$ dargestellt. Als erforderliches Mittel zur Bildung des Winkelsignals genügt z.B. eine Eingabeeinrichtung, die in Fig. 3 als ein von dem für die Führung der Stellglied-Ausgangsgrössen vorgegebenen Steuerwinkel $\varphi^* = \omega t$ gesteuerter Sägezahngenerator 29 dargestellt ist. Das Ausgangssignal dieses Sägezahngenerators ist jeweils nach einer Drittelperiode zwischen einem −180° entsprechenden Minimalwert und einem +180° entsprechenden Maximalwert veränderlich und stellt somit ein Winkelsignal $\varphi^{3*}$ dar, durch das im raumfesten Bezugssystem die Bestimmungsgrössen des Bezugsvektors (z.B. eines durch den Betrag 1 und die Richtung $-\varphi^{3*}$ in Polarkoordinaten oder durch die orthogonalen Komponenten $\cos\varphi^{3*}, -\sin\varphi^{3*}$ bestimmten Einheitsvektors) festgelegt sind, der bezüglich einer raumfesten Bezugsachse mit der Frequenz $-3\omega^*$ umläuft. Der Bezug zu der Führungsgrösse ist durch einen polar/kartesisch arbeitenden Koordinatenwandler 29' angedeutet, dem neben dem Winkelsignal $\varphi^*$ auch die Sollamplitude $U_0^*$ der Führungsgrösse (Spannung) zugeführt ist und der diese Polarkomponenten des Führungsgrössenvektors in entsprechende kartesische Komponenten umrechnet, von denen die Komponente $U_0^* \cos\varphi^*$ vom Stellglied (Umrichter 5) als Steuer- oder Regelgrösse zum Stellen des Stromes $i_1$ verwendet werden kann.

Sodann wird der Messwert $i_0$ derart mit dem Winkelsignal $\varphi^*$ demoduliert, dass zwei im Koordinaten-Gegensystem $(\alpha'', \beta'')$ die Komponenten $i_{\alpha''}, i_{\beta''}$ eines zeitlich veränderlichen Istwert-Vektors $\underline{i}$ darstellende demodulierte Messwertsignale erhalten werden. Die Komponenten des Istwert-Vektors $\underline{i}$ im raumfesten Bezugssystem sind dabei mit dem Istwert-System durch eine zeitunabhängige algebraische Verknüpfungsvorschrift verbunden, z.B. bei dem zunächst betrachteten skalaren Messwert $i_0 = i_1 + i_2 + i_3$ durch $i_\alpha = i_0, i_\beta = -i$ oder $i_\beta = 0$ (d.h. Richtung $\varphi = 0$). Dieser Fall ist in der Vektorstufe 32 in Fig. 3 verarbeitet. Im allgemeinen Fall sind der Vektordreherstufe aber neben dem Winkelsignal $\varphi^*$ die Bestimmungsgrössen des dem nullkomponentenfreien Messwertsystem zugeordneten Instwertvektors, wie er z.B. von einem 3/2-Wandler geliefert wird, zugeführt, so dass mit dem Verfahren simultan alle Istwerte $i_1, i_2, i_3$ gleichzeitig verarbeitet werden.

In Fig. 3 ist zur Verdeutlichung des Verfahrens eine Polardarstellung gewählt, so dass die entsprechenden Polarkoordinaten (konstante Richtung $\varphi = 0$, Vektorbetrag $i = i_0$) der Vektordreherstufe 32 zugeführt sind.

Der Messwert $i_0$ enthält vor allem die bestimmte Grundfrequenz $\omega^*$, die durch $\overline{i''} \cdot \sin(-\omega^* t + \overline{\varphi''})$ mit konstanter Amplitude $\overline{i''}$ und Phase $\overline{\varphi''}$ beschreibbar ist. Der Vektor stellt im Koordinaten-Gegensystem einen Vektor dar, dessen Polarkomponenten im wesentlichen die Gleichanteile $\overline{i''}$ und $\overline{\varphi''}$ enthält. Die Additionsstelle 30 nimmt daher eine Demodulation des Istwert-Vektors vor, wobei der nachgeschaltete Koordinatenwandler (31) die demodulierten Polarkoordinaten in entsprechende demodulierte Messwertsignale $i_{\alpha''}, i_{\beta''}$ umrechnet, die die kartesischen Komponenten $i_{\alpha''}, i_{\beta''}$ des Istwertvektors im orthogonalen Koordinaten-Gegensystem darstellen.

Anschliessend werden gemäss der Erfindung die zeitlichen Mittelwerte dieser transformierten Vektorkomponenten (demodulierten Messwertsignale) gebildet. Dies geschieht mittels der Filterstufe 33, die z.B. aus jeweils einem integrierenden Bauglied, z.B. einem Tiefpassfilter, für jedes der beiden demodulierten Messwertsignale besteht. Die zeitlichen Mittelwerte stellen dann die auf das Koordinaten-Gegensystem bezogenen kartesischen Komponenten eines mit dem Koordinaten-Gegensystem rotierenden Gegensystem-Vektors $\overline{i''}$ dar. Diese Tiefpassfilter sind zwar an sich dynamische Glieder, jedoch liefern sie Gleichspannungen und dienen nur zur Unterdrückung der Oberschwingungen im rotierenden System. Eine Phasenverschiebung der Grundschwingung kann dadurch nicht bewirkt werden.

Bei unterdrücktem Gegensystem liefern die Filter $\overline{i''} = 0$. Daher kann zur Gegensystemunterdrückung der Gegensystem-Vektor zusammen mit dem Sollwert $\underline{i''} = 0$ einem Nullpunktregler zugeführt werden. Wird aber zur Unterdrückung das Gegensystem erfasst und der Stellgliedsteuerung gegenphasig aufgeschaltet, so stellt der Gegensystem-Vektor $\underline{i''}$ selbst die Regelabweichung von dem Nullpunkt dar und kann ohne Verwendung von Reglern weiterverarbeitet werden.

Schliesslich werden die Regelabweichungen $(\overline{i}_{\alpha''} - 0, \overline{i}_{\beta''} - 0)$ der Tiefpassfilter wieder derart rückmoduliert, dass ein eine raumfeste Komponente des Mitsystemvektors darstellendes rückmoduliertes Messwertsignal $\underline{i'}$ (raumfester Korrekturvektor) erhalten wird, wobei dem rückmodulierten Messwertsignal durch die zur zeitunabhängigen algebraischen Zuordnungsvorschrift inverse Zuordnung ein Korrekturgrössen-System für die Stell- oder Führungsgrössen zugeordnet wird. An der Subtraktionsstelle 95 werden Korrekturvektor und Stellgrössenvektor (Sollvektor) für die Steuerung des Stellgliedes kompensatorisch überlagert (Gegenkopplung).

Die Rückmodulation geschieht mittels der zweiten Vektordreherstufe 34. Dabei werden zunächst die kartesischen Vektorkomponenten $\overline{i}_{\alpha''}, \overline{i}_{\beta''}$ in die Polarkomponenten eines mit dem Koordinaten-Gegensystem rotierenden Polarkoordinatensystems umgerechnet. Anschliessend wird in das ruhende Bezugssystem rücktransformiert, wobei der Vektorbetrag des Gegensystemvektors invariant bleibt und als amplitudengetreues Mass für die Gegenschwingungsamplitude abgegriffen werden kann. Da der Gegensystemvektor im Koordinaten-Gegensystem ruht, ist seine entsprechende Winkelvariable eine Gleichspannung, der nunmehr an der Subtraktionsstelle 36 das Winkelsignal $\varphi^*$ entsprechend der Rücktransformation ins raumfeste Bezugssystem aufgeschaltet wird, also gegenüber der Aufschaltung an der Additionsstelle 31 mit entgegengesetztem Vorzeichen. Das dabei entstehende Signal $\overline{\varphi''}$ stellt dann wiederum eine mit der Frequenz $3\omega^*$ veränderliche Grösse dar, die jedoch gegenüber dem Winkelsignal $\varphi^{3*}$ um eine bestimmte Phasendifferenz verschoben ist. Die Bezeichnung der im wesentlichen die Koordinatenwandler 31 und 35 zur wechselseitigen Umrechnung von Polarkoordinaten in Karthesekoordinaten enthaltenden Stufen 32 und 34 als «Vektordreherstufen» weist bereits darauf hin, dass vorteilhaft nicht mit Polarkoordinaten gearbeitet wird. Fig. 4 zeigt eine in kartesischer Vektordarstellung arbeitende Vorrichtung. Sie dient zur Unterdrückung einer Gegensystem-Grundschwingung in einem nullkomponentenfreien Spannungssystem $U_1$, $U_2$, $U_3$, das mittels des Koordinatenwandlers 90' als Istwert-Vektor $\underline{U}$ dargestellt ist.

Das Winkelsignal $\underline{\varphi}^*$ wird hier mittels eines Vektoranalysators 91 als Richtungsvektor des dem Stellglied vorgegebenen Sollspannungsvektors $\underline{U}^*$ bestimmt und dem Winkelsignaleingang des vom Istwert-Vektor $\underline{U}$ beaufschlagten Vektordrehers 32'' zugeführt. Dieser transformiert jede kartesische raumfeste Komponente in die entsprechende kartesische Komponente im Koordinaten-Gegensystem. Jeweils ein Filter (Filterglied 33'') mittelt diese transformierte Komponente. Die Regelvergleichsstelle 97 bildet die Regelabweichungen vom konstanten Sollvektor $\underline{\Phi}$ = 0 bezüglich dieses Koordinatensystems. Nach Rücktransformation mittels eines zweiten Vektordrehers 34'' ins raumfeste Bezugssystem werden die Reglerausgangsgrössen als Komponenten eines Korrekturvektors dem Sollspannungsvektor $\underline{U}^*$ zugeführt (Additionsglied 95) und durch einen 2/3-Wandler 92 in die Steuergrössen für die Spannungssteuerung des Stellgliedes umgeformt.

Da jedoch der Istwert-Vektor neben dem Gegensystem vor allem das Mitsystem enthält, sind die Filter 33'' auf die Unterdrückung grosser Wechselgrössen-Amplituden auszulegen. Dies kann vermieden werden, wenn nicht der transformierte Istwert-Vektor $\underline{U}$, sondern die transformierte Vektordifferenz $\underline{U} - \underline{U}^*$ gemittelt wird. Dazu dient die Subtraktionsstelle 41, die vorzugsweise der ersten Vektordreherstufe 32'' vorgeschaltet ist. Diese Separation des Gegensystems vom Mitsystem kann auch dadurch erfolgen, dass die Differenz $\underline{U} - \underline{U}'$ gemittelt wird, falls der Mitsystem-Vektor $\overline{\underline{U}'}$ anderweitig zur Verfügung gestellt ist.

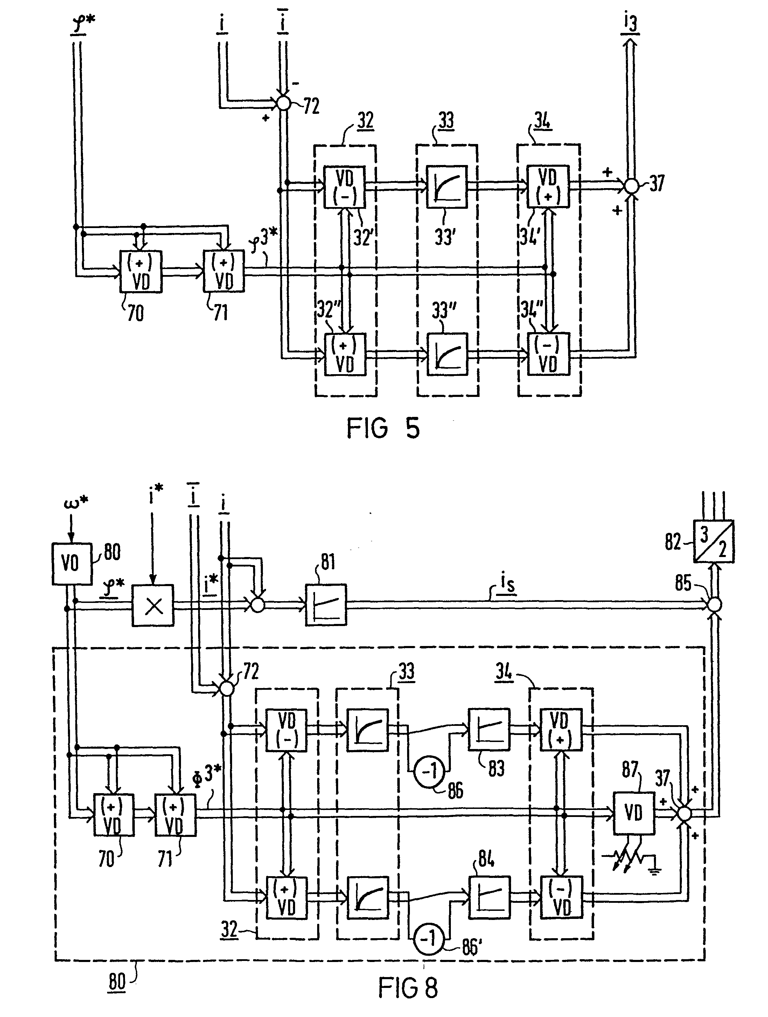

Für die Ermittlung einer Gegensystem-Oberschwingung, wie sie in Fig. 3 dargestellt ist, zeigt Fig. 5 folgende vorteilhafte Weiterbildung, wie sie für das nullkomponentenfreie Messwertsystem $\underline{i}$ besonders vorteilhaft ist.

Der Vektordreherstufe 32 kann zur Separation des Oberschwingungssystems vom Grundschwingungssystem eine Subtraktionsstelle zur Subtraktion des Grundschwingungs-Messwertsystems $\underline{i}$ (oder des Sollwertsystems $\underline{i}^*$) vorgeschaltet sein. In der Vektordreherstufe wird bei dieser Ausführungsform der Istwertvektor sowohl in das Koordinaten-Gegensystem, wie in ein mit gleicher Frequenz gegensinnig rotierendes Koordinaten-Mitsystem transformiert. Die Komponenten des Istwert-Vektors werden also auch derart mit dem Winkelsignal demoduliert, dass zwei weitere, die Komponenten des Istvektors im Koordinaten-Mitsystem darstellende demodulierte Messwertsignale $i_{\alpha'}$, $i_{\beta'}$ erhalten werden. Hierzu enthält die erste Vektorstufe 32 einen ersten dem Mitsystem zugeordneten Vektordreher 32', der die raumfesten Komponenten des Istwert-Vektors ins Koordinaten-Mitsystem umrechnet und einen ersten, dem Koordinaten-Gegensystem zugeordneten Vektordreher 32'', der die raumfesten Komponenten des Istwert-Vektors ins Koordinaten-Gegensystem umrechnet.

Ferner werden auch die zeitlichen Mittelwerte der weiteren demodulierten Messwertsignale $i_{\alpha'}$, $i_{\beta'}$ als entsprechende, auf das Koordinaten-Mitsystem bezogene Komponenten $\overline{i}_{\alpha'}$, $\overline{i}_{\beta'}$ eines mit dem Mitsystem rotierenden Mitsystem-Vektors $\overline{\underline{i}'}$ gebildet. Hierzu enthält die Filterstufe 33 neben den Tiefpassfiltern 33'' für die Vektorkomponenten im Koordinaten-Gegensystem auch für jede Komponente im Koordinaten-Mitsystem je einen Integrator bzw. ein entsprechend dimensioniertes Tiefpassfilter zur Bildung der Gleichanteile dieser Komponenten, wobei die beiden dem Mitsystem zugeordneten Tiefpassfilter wiederum nur durch ein gemeinsames Filtersymbol 33' dargestellt sind.

Sodann werden auch die zeitlichen Mittelwerte der weiteren demodulierten Messwertsignale derart rückmoduliert, dass ein eine raumfeste Komponente des Mitsystem-Vektors $\overline{\underline{i}'}$ darstellendes weiteres rückmoduliertes Messwertsignal erhalten wird.

Hierzu enthält die zweite Vektordreherstufe 34 sowohl einen zweiten, dem Mitsystem zugeordneten Vektordreher (34'), der die Komponenten des Mitsystemvektors aus dem Koordinaten-Mitsystem ins raumfeste Bezugssystem umrechnet, wie einen zweiten, dem Gegensystem zugeordneten Vektordreher 34'', der den Gegensystem-Vektor $\overline{\underline{i}''}$ in dessen Komponenten bezüglich des raumfesten Bezugssystems umrechnet.

Werden schliesslich die beiden rückmodulierten Messwertsignale zu einem eine Komponente eines Korrekturvektors darstellenden elektrischen Signal addiert, so sind durch die zur zeitunabhängigen algebraischen Zuordnungsvorschrift inverse Zuordnung die Oberschwingungen der Messwerte i bestimmt, die dann zur Kompensation den Führungs- oder Stellgrössen des Stellgliedes aufgeschaltet werden können.

Das Winkelsignal $\varphi^{3*}$ wird herbei vorteilhaft dadurch gebildet, dass das mit der Grundschwingung der Mess- oder Sollwerte synchrone Winkelsignal $\varphi^*$ sowohl einem ersten Vektordreher 70 wie den Winkelsignaleingängen dieses ersten Vektordrehers und eines unmittelbar nachgeschalteten weiteren Vektordrehers 71 aufgeschaltet wird.

Bei dieser Ausführungsform kann also gleichzeitig mit dem Oberschwingungs-Gegensystem auch das Oberschwingungs-Mitsystem unterdrückt werden.

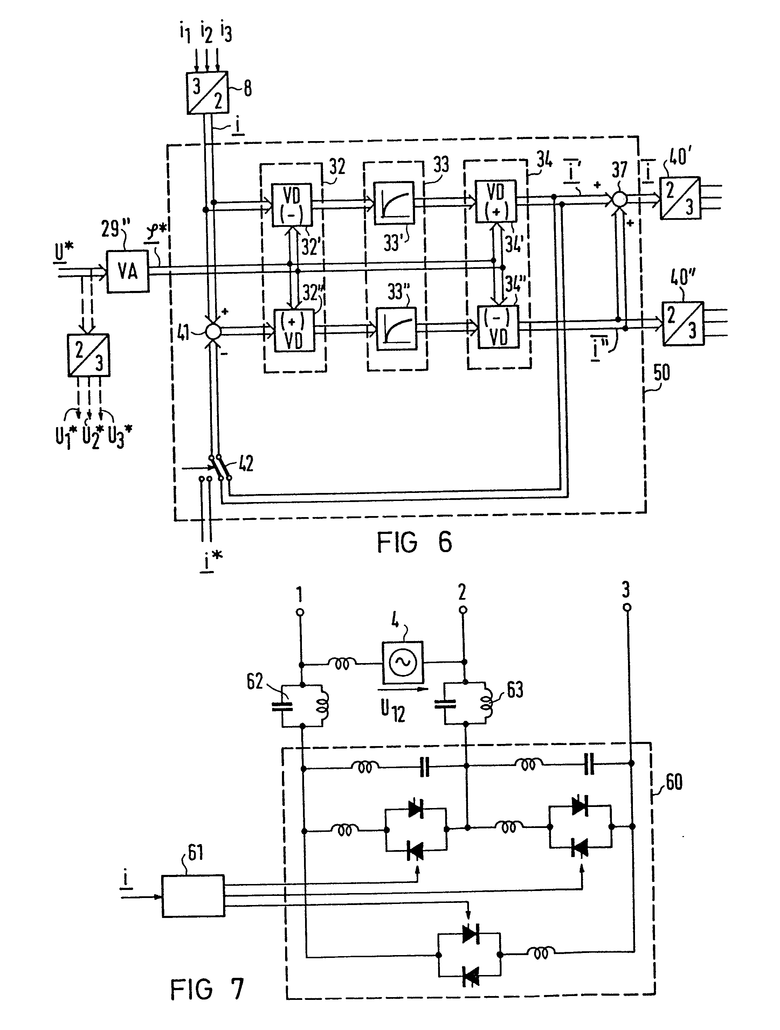

Wird bei der in Fig. 5 gezeigten Schaltung jedoch anstelle des Winkelsignals $\varphi^{3*}$ das Winkelsignal $\underline{\varphi}^*$ selbst verwendet, so gelangt man zu einer Schaltung, bei der sowohl für die kompensatorische Aufschaltung mittels des 2/3-Wandlers 40″ (Fig. 6) der Korrekturvektor für die Unterdrückung eines Stromgrundschwingungsgegensystems abgegriffen, wie auch am Additionsglied 37 mittels des 2/3-Wandlers das gesamte Grundschwingungssystem $\underline{i} = \underline{i}' + \underline{i}''$ gebildet werden kann, das als Umsteuersignal für die Kommandostufe des Direktumrichters benötigt wird. Dies zeigt Fig. 6.

Ein Umschalter 42 ermöglicht hierbei, die Separation von Mitsystem und Gegensystem wahlweise mit dem symmetrischen Sollwertsystem $\underline{i}^*$ oder mit dem rückgeführten Mitsystem $\underline{i}'$ durchzuführen.

Die gesamte, mit 50 bezeichnete Baugruppe kann demnach als ein das dynamische Filter 10′ in Fig. 1 ersetzendes statisches Vektorfilter eingesetzt werden, um aus den Messwerten des Stromes am jeweiligen Umrichterausgang die Grundschwingung phasenrichtig zu erfassen und beim Nulldurchgang der Grundschwingung ein Umschaltsignal abzugeben, mit dem die Kommandostufe eine Direktumrichters die Umschaltung zwischen den antiparallelen, auf einen gemeinsamen Ausgang arbeitenden Gleichrichterbrücken eines Direktumrichters vornimmt. Die Umschaltung ist vor allem vorteilhaft, wenn durch das Führungsgrössensystem nicht der Soll-Spannungsvektor $\underline{U}^*$, sondern ein Soll-strom-Vektor $\underline{i}^*$ vorgegeben ist, d.h. der Umrichter nicht mit Spannungseinprägung, sondern mit Stromeinprägung arbeitet.

Die Erfindung lässt sich vorteilhaft insbesondere dazu verwenden, aus einem normalen 50 Hz-Drehspannungsnetz in das 16 2/3-Hz-Wechselspannungssystem einer Bahnstromversorgung einzuspeisen. Um bei den üblichen Leistungen von Bahnnetzen die auftretenden erheblichen Rückwirkungen auf das speisende Netz zu vermindern, sind Symmetriereinrichtungen bekannt, dies es gestatten, den durch den Umrichter fliessenden Strom symmetrisch auf die drei Umrichterausgänge zu verteilen, so dass eine gleichmässige Belastung des Wechselrichters erreicht und störende Netzrückwirkungen unterdrückt werden (deutsche Offenlegungsschrift 2 939 514, Sonderdruck aus «Elektrische Bahnen» 1981, Seiten 286 bis 288, 312 bis 314).

Eine derartige Anordnung ist in Fig. 7 gezeigt, wobei an die beiden Umrichterausgänge 1 und 2 die Einphasenlast 4 gelegt ist und die an die drei Umrichterausgänge ferner angeschlossene Symmetriereinrichtung 60 aus einer Sternschaltung von drei Phasenschiebern besteht. Jeder Phasenschieber stellt eine über eine entsprechende Steuereinrichtung 61 steuerbare Impedanz dar. Zwischen die Ausgänge 1 und 2 bzw. 2 und 3 sind ferner Saugkreise angeordnet, die auf die verschiedenen Oberschwingungen der Umrichterausgangsfrequenz abgestimmt sind.

Dabei sind insbesondere erhebliche Stromoberschwingungen dritter Ordnung zu befürchten. Selbst wenn die Umrichterausgangsspannung durch ein zu einem symmetrischen System von Ausgangsspannungen gehörendes System von Führungsgrössen bestimmt ist, kann die Rückwirkung der Stromoberschwingung auf den Umrichter dessen Spannung so deformieren, dass eine ordnungsgemässe Steuerung der elektronischen Symmetriereinrichtung wesentlich erschwert wird. Um diese Rückwirkungen der Stromoberschwingungen auf die Umrichterausgangsspannung gering zu halten, sind vorteilhaft den an die Umrichterausgänge 1 und 2 angeschlossenen Symmetriereinrichtung auf diese dritte Oberschwingung (50 Hz) ausgelegte Sperrkreise 62, 63 vorgeschaltet. Um die Stromoberschwingung noch wirkungsvoller zu unterdrükken und auch die elektronische Symmetriereinrichtung von diesen Oberschwingungen zu entlasten, ist vorgesehen, das erfindungsgemässe Verfahren dazu zu verwenden, die harmonische Schwingung der betreffende Ordnung zu erfassen und eine entsprechende Korrekturgrösse der Führungsgrösse oder einer aus der Führungsgrösse abgeleiteten Stellgrösse aufzuschalten. Dies entspricht einer Störgrössenaufschaltung und ermöglicht dann die Unterdrückung der betreffenden Oberschwingung.

Insbesondere kann man zum Unterdrücken einer im Messwert enthaltenen Oberschwingung n-ter Ordnung so vorgehen, dass die Gleichanteile der mit der n-fachen Sollfrequenz demodulierten Messwertsignale jeweils einem Nullpunktregler zugeführt und erst die Ausgangssignale der Nullpunktregler anstelle der demodulierten Messwertsignale selbst rückmoduliert werden. Die durch die inverse Zuordnung gewonnene Grösse kann dann als Störungsgrösse der Führungsgrösse oder einer aus der Führungsgrösse abgeleiteten Stellgrösse aufgeschaltet werden.

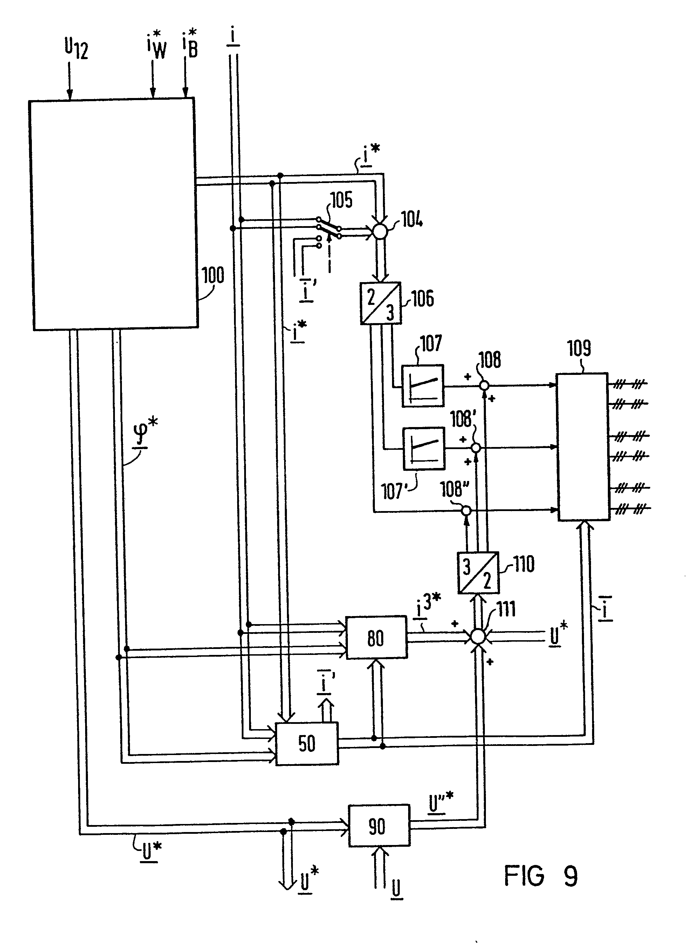

Eine entsprechende Schaltung ist in Fig. 4 bereits gezeigt. Eine weitere Vorrichtung ist in Fig. 8 dargestellt. Dabei ist von einer Stromeinprägung ausgegangen, die dadurch erreicht wird, dass zur Vorgabe eines symmetrischen Führungsgrössensystems für den Umrichterausgangsstrom einmal die Sollfrequenz $\omega^*$ vorgegeben und über einen Vektoroszillator 80 in $\cos \omega^* t$, $\sin \omega^* t$ (die Komponenten eines umlaufenden Einheitsvektors $\underline{\varphi}^*$) umgesetzt wird. Das Führungsgrössensystem wird ferner durch Eingabe des Sollwertes $i^*$ für die Amplitude des Stromsystems festgelegt und durch Multiplikation mit den Komponenten des Einheitsvektors $\underline{\varphi}^*$ wird ein synchron umlaufender Strom-Sollvektor $\underline{i}^*$ erzeugt. Durch Regelvergleich mit dem entsprechenden Istwert-Vektor $\underline{i}$ werden mittels einer Stromreglerstufe 81 die Komponenten eines Steuervektors $i_s$ gebildet, die mittels des Komponentenwandlers 82 in die entsprechenden Stellgrössen für die Gleichrichterbrücken des Umrichters umgesetzt werden.

Zum Unterdrücken der dritten harmonischen Schwingung ist die Baugruppe 80 vorgesehen, die entsprechend Fig. 5 aufgebaut ist. Zum Bilden des Winkelsignals dienen wiederum die beiden hintereinander geschalteten Vektordreher 70, 71, wobei die Komponenten des Einheitsvektors $\varphi^*$ sowohl dem Vektoreingang des Vektordrehers 70 wie den Winkelsignaleingängen beider Vektordreher 70, 71 zugeführt ist.

Abweichend von Fig. 5 ist zwischen die Filter 33 und die zweiten Vektordreher 34 für jede Komponente des Mitsystemvektors und des Gegensystemvektors jeweils ein Nullpunktregler geschaltet, wobei die Regler für die Mitsystemvektor-Komponenten durch ein einziges Reglersymbol 83 und die Regler für die Gegensystemkomponenten durch ein einziges Reglersymbol 84 dargestellt sind. Die Regler 83, 84 sind vorzugsweise integrale Regler und ihre Ausgänge stellen nunmehr die Komponenten eines Mitsystem-Korrekturvektors bzw. Gegensystem-Korrekturvektors dar, wobei diese Vektoren durch die zweite Vektordreherstufe 34 ins raumfeste Bezugssystem rücktransformiert und an der Additionsstelle 35 zu einem resultierenden Korrekturvektor zusammengesetzt werden. Dieser resultierende Korrekturvektor wird an einer Additionsstelle 85 dem von den Stromreglern 81 gelieferten Steuervektor im Sinne einer Spannungsvorsteuerung des Umrichters überlagert.

Anstelle einer Spannungsvorsteuerung bei Stromeinprägung kann bei einer Spannungseinprägung als Führungsgrössensystem auch, wie in früher betrachteten Fällen, das Spannungssystem vorgegeben werden, wobei der Korrekturvektor direkt dem Sollspannungsvektor überlagert und als Eingangsgrösse der Spannungsregelung verwendet wird.

Unabhängig von der durch verschiedene Fehlerquellen erzeugten dritten harmonischen Schwingung des Spannungsmitsystems bzw. Spannungsgegensystems eilt der Strom in dem hier betrachteten Anwendungsfall den Spannungen um etwa 90° nach. Deshalb ist zwischen Filterstufe 33 und den Nullpunktreglern 83, 84 eine Einrichtung vorgesehen, die den Mitsystem-Vektor und den Gegensystem-Vektor jeweils um 90° dreht. Da die Drehung eines Vektors um 90° dadurch erreicht werden kann, dass das Vorzeichen einer Komponente geändert und die Rollen der beiden Komponenten vertauscht werden, kann dies gemäss Fig. 8 dadurch geschehen, dass die Ausgänge der Filterstufe 33 kreuzweise mit Eingängen der Nullpunktregler 83, 84 verbunden werden, wobei jeweils eine Komponente des von der Filterstufe 33 gelieferten Mitsystem-Vektors bzw. Gegensystem-Vektors mittels der Invertierglieder 86, 86' negiert wird.

Dabei ist es vorteilhaft, ein System von trapezförmigen Ausgangsspannungen am Umrichter zu erzeugen. Eine Trapezkurve enthält neben der Grundschwingung vor allem eine ausgeprägte dritte Oberfrequenz. Bei dieser Anordnung, bei der von einem gleichförmig umlaufenden Vektor $\varphi^*$ für die Führungsgrösse ausgegangen wird, kann man diese trapezförmige Aussteuerung vorteilhaft dadurch erhalten, dass dem entsprechenden, mit der Grundfrequenz umlaufenden Steuervektor die dritte Oberschwingung dadurch aufgeprägt wird, dass ein mit einer geeigneten Phasenlage und dreifacher frequenzumlaufender Korrekturvektor aufgeschaltet wird. Da das von dem Vektordreher 71 gelieferte Winkelsignal bereits einen mit dreifacher Frequenz umlaufenden Vektor darstellt, kann die trapezförmige Aussteuerung dadurch erreicht werden, dass mittels eines weiteren Vektordrehers 87, dessen Winkelsignaleingang mit einem konstanten Winkelsignal beaufschlagt ist, dieser mit dreifacher Frequenz rotierende Vektor zu dem ohnehin bereits gebildeten Korrekturvektor addiert und an der Additionsstelle 85 dem Steuervektor überlagert wird.

Auch bei Fig. 8 ist eine den beiden Vektordrehern der ersten Vektordreherstufe 32 vorgeschaltete Subtraktionsstufe 72 zur komponentenweisen Subtraktion eines den in den Messwerten enthaltenen Grundschwingungen zugeordneten Grundschwingungsvektors $\underline{i}$ von dem Istwert-Vektor $\underline{i}$ vorgesehen.

Obwohl das Messwertsystem durch ein rotierendes symmetrisches System von Führungsgrössen bestimmt ist, kann, wie bereits erläutert wurde, ein störendes Messwert-Gegensystem auftreten. Nach der soeben erläuterten Unterdrückung von Oberschwingungen macht sich dieses Gegensystem noch in einer Gegensystem-Grundschwingung bemerkbar, die auf ähnliche Weise unterdrückt werden kann.

In Fig. 9 ist schematisch dargestellt, wie die bisher betrachteten Einzelschaltungen zusammengesetzt werden können, für die Steuerung und Regelung der in Fig. 1 dargestellten Stromrichteranordnung, wobei insbesondere davon ausgegangen ist, dass ein Umrichter eine unsymmetrische Last und eine dazu parallele elektronische Symmetriereinrichtung speist.

Der Umrichter wird mit Stromeinprägung betrieben, wozu von einem Sollwertgeber 100 der Sollwert-Vektor $\underline{i}^*$ für den Ausgangsstrom, ein mit der Sollfrequenz $\omega^*$ umlaufender Bezugsvektor $\varphi^*$ als Winkelsignal und der Sollwert-Vektor $\underline{U}^*$ für die Ausgangsspannung vorgegeben wird.

Aus den Führungsgrössen $\underline{i}^*$ des Umrichters wird an einer Vergleichsstelle 104 der Sollwert-Istwert-Vergleich vorgenommen, wobei als Istwerte wahlweise der das Messwertsystem beschreibende Stromvektor $\underline{i}$ oder dessen z.B. an einer Anordnung nach Fig. 6 anstehender Istwert-Grundschwingungsvektor $\underline{i}$ oder der Mitsystem-Grundschwingungsvektor $\underline{i}'$ verwendet werden kann (Umschalter 105). Ein nachgeschalteter Koordinatenwandler 106 wandelt den beim Regelvergleich erhaltenen Differenzvektor in drei Komponenten um, von denen mindestens zwei einem Regler 107, 107' zugeleitet werden. Ein dritter Regler erübrigt sich wegen der Bedingung $i_1 + i_2 + i_3 = 0$, es kann aber unter Umständen vorteilhafter sein, auch drei Regler zu verwenden und die Einhaltung dieser Bedingung auf andere Weise zu gewährleisten.

Den durch diese Regeleinrichtung erhaltenen Stellgrössen ist an den Additionsstellen 108, 108', 108" jeweils eine Korrekturgrösse aufgeschaltet und die dabei erhaltenen Steuerspannungen sind den Steuersätzen der auf die Umrichterausgänge arbeitenden Gleichrichterbrücken zugeführt, die zusammen mit ihren jeweiligen Kommandostufen (Umschalteinrichtungen) zu einer Umrichterstelleinrichtung 109 zusammengefasst sind. Die den Überlagerungsstellen 108, 108', 108" zugeführten Signale sind mittels eines Koordinatenwandlers 110 aus einer vektoriellen Grösse gebildet, die durch Addition aus zwei Systemen von Korrekturgrössen erhalten ist (Additionsstelle 111).

Das mit $\underline{i}^{3*}$ bezeichnete erste System der Korrekturgrössen ist von einer Vorrichtung zur Unterdrückung der 3. Oberschwingung entsprechend der Baugruppe 80 in Fig. 8 aus der Führungsgrössen-Grundschwingung (Winkelsignal $\underline{\varphi}^*$) und den Strommesswerten (Istwert-Vektor $\underline{i}$) gebildet, wozu vorteilhaft auch der resultierende Vektor $\underline{i}$ des Stromgrundschwingungssystems herangezogen werden kann.

Dieser resultierende Vektor des Stromgrundschwingungssystems wird von einer Vorrichtung 50, die der Baugruppe 50 aus Fig. 6 entspricht, aus dem Messwert-System $\underline{i}$ und dem Winkelsignal $\underline{\varphi}^*$ und ggf. dem Sollvektor $\underline{i}^*$ ermittelt. Die Vorrichtung 50 dient dabei als statisches Vektorfilter, um aus den erfassten Ausgangsströmen des Umrichters die der Sollfrequenz entsprechende Grundschwingung als Umsteuersignal für die in der Stelleinrichtung 109 enthaltenen Kommandostufen zu ermitteln.

Das mit $\underline{U}'''^*$ bezeichnete zweite System von Korrekturgrössen wird von einer Vorrichtung 90, entsprechend der Baugruppe 90 in Fig. 4, aus den Spannungsmesswerten $\underline{U}$ und der Führungsgrössen-Grundschwingung $\underline{\varphi}^*$ bzw. dem damit angestrebten symmetrischen System von Ausgangsspannungen (Spannungssollvektor $\underline{U}^*$) ermittelt.

Bei der hier beschriebenen Stromregelung werden die Korrekturgrössen zur Vorsteuerung der Steuerspannungen des Umrichters benutzt. Man kann aber auch eine Spannungsregelung vorsehen, wobei die Korrekturgrössen als Störgrössen direkt dem Sollspannungssystem aufgeschaltet und die Regler 107, 107' für einen Spannungsregelvergleich erst hinter der Korrekturgrössenaufschaltung angebracht sind.

Diese Vorrichtung gestattet einerseits eine Einspeisung in ein Wechselspannungssystem aus einem Drehspannungssystem ohne störende Rückwirkungen auf das speisende Drehspannungssystem, andererseits können der Umrichter und die zur Symmetrierung der Einphasenlast vorgesehene Symmetriereinrichtung allein auf die zu übertragende Wirkleistung abgestimmt werden, ohne wegen Gegensystemschwingungen oder Oberschwingungen überdimensioniert werden zu müssen.

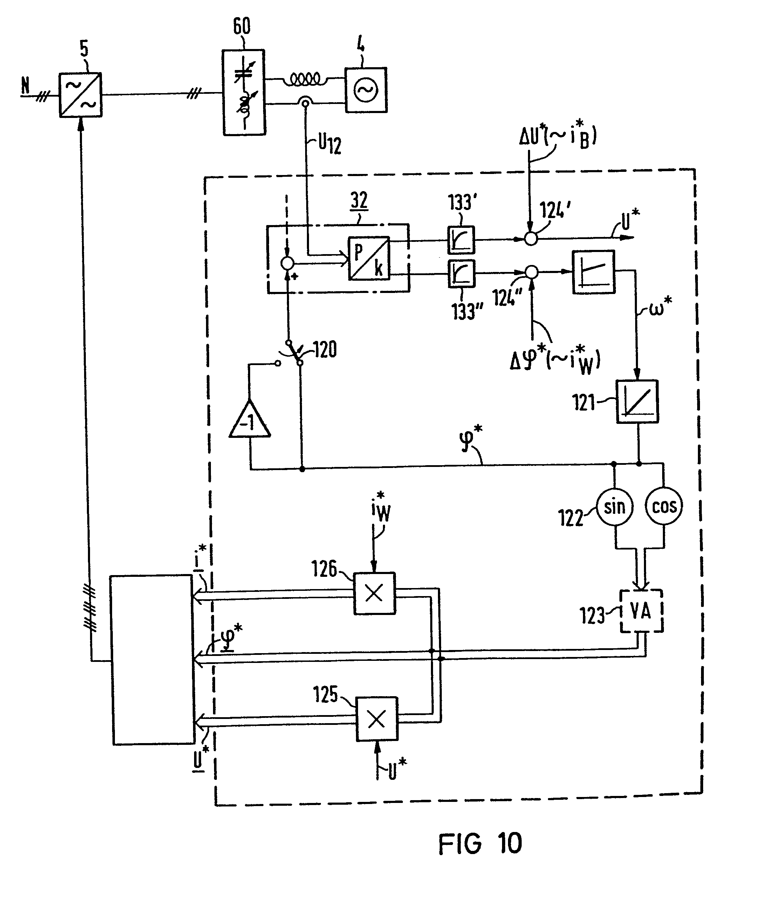

In Figur 10 ist das Prinzip des in Figur 9 angedeuteten Sollwertgebers 100 näher dargestellt. Zur Einspeisung in die einphasige Last 4, die parallel zu einer Symmetriereinrichtung 60 nach Fig. 7 geschaltet ist und am Umrichter 5 angeschlossen ist, wird die Lastspannung $U_{12}$ gemessen, z.B. die Spannung eines 16 2/3-Hz-Bahnnetzes. Eine erste Vektordreherstufe ermittelt zunächst die Amplitude und die auf die Phase $\varphi^* = \omega^* t$ der Umrichter-Ausgangssollspannung $\underline{U}^*$ bezogene Grundschwingung der Lastspannung. Das kann z.B. mittels einer Vektordreherstufe 32 geschehen, wie sie in Fig. 3 dargestellt ist, der jedoch anstelle des Winkelsignals $\varphi^{3*}$ mit der Frequenz $3\omega^*$ das mit der einfachen Frequenz $\omega^*$ rotierende Winkelsignal $\varphi^*$ vorgegeben ist. Das Ausgangssignal dieser Stufe 32 ist – je nach Stellung eines Umschalters 120 zum Polaritätswechsel von $\varphi^*$ – ein auf das Koordinaten-Mitsystem oder -Gegensystem bezogener Istwert-Vektor mit den Komponenten $|U_{12}| \cos \Delta\varphi$ $|U_{12}| \sin \Delta\varphi$, der der Lastspannung $U_{12} = |U_{12}| \cdot \cos (\omega^* t + \Delta\varphi)$ zugeordnet ist.

Durch Glättung (Filter 133', 133") wird die entsprechende Lastspannungs-Grundschwingung gebildet. Da die Lastspannung $U_{12}$ wegen der Ankopplungsglieder gegenüber der Ausgangsspannung $\underline{U}$ bzw. deren Sollvektor $\underline{U}^*$ um einen Zusatzvektor $\underline{\Delta U}^*$ unterschieden sein muss, wenn ins Lastnetz ein Wirkstrom $i_w$ und ein Blindstrom eingespeist werden soll, wird zum Vektor der Lastspannung der zu $i_o^*$ und $i_w^*$ gehörende, den Spannungsabfall bei der Ankoppelung beschreibende Vektor $\underline{\Delta U}^*$ addiert. Diese Vektoraddition liefert dann im rotierenden Bezugssystem den Sollwertvektor $\underline{U}^*$ der Ausgangsspannung.

Dabei zeigt sich, dass der Betragssollwert $U^* = |\underline{U}_{12} + \underline{\Delta U}^*|$ dadurch vorgegeben werden kann, dass der einen Komponente ein dem Blindstromsollwert $i_B^*$ entsprechender Sollwert $\Delta U^*$ addiert wird (Additionsstelle 124'), wenn gleichzeitig die Richtung des Vektors $\underline{U}^*$ gegenüber dem Grundschwingungs-Vektor der Lastspannung um einen dem Wirkstrom-Sollwert proportionalen Sollwinkel $\Delta\varphi^*$ verschoben wird.

Diese Richtungsverschiebung geschieht dadurch, dass das Winkelsignal $\varphi^*$ der Richtung ($\varphi^* + \Delta\varphi$) des transformierten Lastspannungsvektors mit der Phasenverschiebung $\Delta\varphi^*$ nachgeführt wird. Hierzu wird die Richtungs-Regelabweichung ($\Delta\varphi^* - \Delta\varphi$) des Lastspannungsvektors vom Sollwert $\varphi^* + \Delta\varphi^*$ gebildet und durch einen Nullpunktregler ausgeregelt. Dessen Ausgangssignal dient zur Frequenzverstellung des Winkelsignals $\varphi^*$ und ist daher als Sollfrequenz $\omega^*$ einem Integrator 121 zugeführt.

Entsprechend dem Vorzeichen des Wirkstromflusses ins Lastnetz muss das Vorzeichen der Phasenverschiebung zwischen $\underline{U}_{12}$ und $\underline{U}^*$ umgekehrt werden, was durch entsprechende Änderungen der Vorzeichen einzelner Richtungsgrössen geschehen kann, wie durch den Umschalter 120 symbolisch dargestellt ist.

Das vektorielle Winkelsignal $\underline{\varphi}^*$ kann aus dem Integrator-Ausgang $\varphi^*$ mittels Sinus- und Cosinus-Generatoren 122 gewonnen werden, denen zur gemeinsamen Normierung ein Vektoranalysator 123 nachgeschaltet sein kann.

Durch Multiplikation mit der an 124' abgegriffenen Sollspannungsamplitude U* bildet ein Multiplizierer 125 aus der Richtung $\varphi^*$ die Komponenten des Sollwertvektors $\underline{U}^*$ der Umrichter-Ausgangsspannung. In analoger Weise bildet ein Multiplizierer 126 durch Multiplikation mit dem Wirkstromsollwert $i_w^*$ den Sollvektor $\underline{i}^*$ für den Umrichter-Ausgangsstrom.

Andere Möglichkeiten für den Sollwertgeber 100, die Erfassung der Grundschwingung am Umrichter-Ausgang und die Bildung des Winkelsignals sind in einer gleichzeitig eingereichten, auf die gleichen Prioritätsanmeldungen zurückgehenden europäischen Anmeldung des gleichen Anmelders enthalten, die auch weitere Erläuterungen der Begriffe «Mit- und Gegensystem», «Nullkomponente», «symmetrisches System» enthält.

Auf diese Weise kann, ausgehend von der einphasigen Lastspannung $U_{12}$ als Führungsgrösse ein symmetrisches Spannungsstellgrössen-System $\underline{U}^*$ und ein dazu synchrones Stromstellgrössensystem $\underline{i}^*$ gewonnen werden, wobei das eine Stellgrössensystem zur Regelung des Umrichters, das andere Stellgrössensystem zu einer unterlagerten Regelung oder einer Vorsteuerung benutzt werden kann. Der Umrichter überträgt dabei nur Wirkleistung und liefert bei einer geeigneten Regeleinrichtung, wie sie z.B. in Fig. 9 dargestellt ist, ein symmetrisches System von Spannungen, mittels derer ein vorgegebener Blind- und Wirkstrom in das Lastnetz eingespeist werden kann.

**Patentansprüche**

1. Verfahren zum Unterdrücken eines Gegensystems in den Ausgangsgrössen eines mehrphasigen Stellgliedes, gekennzeichnet durch folgende Merkmale:

a) es wird ein mit einem vorgegebenen Vielfachen der Grundschwingung frequenzveränderliches Winkelsignal $(\underline{\varphi}^*)$ gebildet, das in einem raumfesten Bezugssystem eine Koordinatenachse eines entgegesetzt zum Umlaufsinn des Grundschwingungssystems rotierenden Koordinaten-Gegensystems bestimmt,

b) die Komponenten eines dem nullkomponentenfreien System der Messwerte im raumfesten Bezugssystem zugeordneten Istwertvektors $(\underline{U})$ werden gebildet und durch Demodulation mit dem Winkelsignal $(\underline{\varphi}^*)$ in die Komponenten $(U_{\alpha''}, U_{\beta''})$ des Istwertvektors im Koordinaten-Gegensystem transformiert (Vektordreher 32''),

c) aus der Regelabweichung (Vergleichsstelle 97) der Mittelwerte (Filter 33'') der transformierten Vektorkomponenten von den Sollwerten Null werden die Komponenten eines Korrekturvektors bezüglich des Koordinaten-Gegensystems gebildet, und

d) durch Rückmodulation mit dem Winkelsignal (Vektordreher 34'') wird der Korrekturvektor ins raumfeste Bezugssystem rücktransformiert und einem Steuervektor für die Steuerung des Stellgliedes kompensatorisch aufgeschaltet (Fig. 4).

2. Verfahren nach Anspruch 1, dadurch gekennzeichnet, dass das Winkelsignal entsprechend der Frequenz des Steuervektors an der Stellgliedsteuerung abgegriffen wird (Fig. 3).

3. Verfahren nach Anspruch 1 oder 2, dadurch gekennzeichnet, dass bei der Transformation die orthogonalen kartesischen Komponenten des transformierten Istwertvektors gebildet werden (Fig. 4).

4. Verfahren nach einem der Ansprüche 1 bis 3, dadurch gekennzeichnet, dass die raumfesten Komponenten des Istwertvektors auch durch Demodulation mit dem Winkelsignal $(\varphi^{3*}$, in die Komponenten $(i_{\alpha}', i_{\beta}')$ des Ist-Vektors in einem mit gleicher Frequenz und entgegengesetzt zum Koordinaten-Gegensystem umlaufenden Koordinaten-Mitsystem transformiert werden (Vektordreherstufe 32), dass auch aus der Regelabweichung (Regler 83, 84) der zeitlichen Mittelwerte (Filterstufe 33) der Vektorkomponenten im Koordinaten-Mitsystem von den Sollwerten Null die Komponenten eines weiteren Korrekturvektors bezüglich des Koordinaten-Gegensystems gebildet werden, dass ein der Vektorsumme (Additionsglied 37) der beiden ins raumfeste Bezugssystem rücktransformierten Korrekturvektoren (Vektordreherstufe 34) entsprechender Zusatzvektor gebildet und dem Steuervektor $(i_s$ kompensatorisch aufgeschaltet wird (Fig. 8).

5. Verfahren nach einem der Ansprüche 1 bis 4, dadurch gekennzeichnet, dass die zeitlichen Mittelwerte der Komponenten des ins Koordinaten-Gegensystem transformierten Istwert-Vektors dadurch gebildet werden, dass die auf das Koordinaten-Gegensystem bezogenen Komponenten der vektoriellen Differenz $(\underline{i} - \underline{i}')$ aus Istvektor $(\underline{i})$ und einem das Mitsystem beschreibenden Vektor $(\underline{i}')$ oder einem das System der Sollwerte beschreibenden Vektor $(\underline{i}^*)$ gemittelt werden (Fig. 6).

6. Verfahren nach einem der Ansprüche 1 bis 5, dadurch gekennzeichnet, dass die Regelabweichungen jeweils einem Nullpunktregler zugeführt werden und die Ausgangssignale der Nullpunktregler der Rücktransformation unterworfen und als Korrekturgrössen der Führungsgrösse oder einer aus der Führungsgrösse abgeleiteten Stellgrösse aufgeschaltet werden (Fig. 8).

7. Anwendung des Verfahrens nach einem der Ansprüche 1 bis 6 zum Unterdrücken eines Grundschwingungs-Gegensystems (Erfassungseinrichtung 90, Aufschaltung 111) oder eines Oberschwingungssystems (Erfassung 80, Aufschaltung 111) bei einem Direktumrichter, bei dem stromflussrichtungsabhängige Umschaltungen zwischen antiparallelen Umrichterbrücken entsprechend den Nulldurchgängen des Grundschwingungssystems der Strommesswerte $(\underline{i})$ vorgenommen werden und das Strom-Grundschwingungssystem durch einen Strom-Grundschwingungsvektor $\underline{i}$ erfasst wird, der durch Transformation des nullkomponentenfreien Istwert-Vektors der Strommesswerte ins Koordinaten-Gegensystem und ins Koordinaten-Mitsystem, Mittelung der transformierten Vektorkomponenten, Rücktransformation ins raumfeste Bezugssystem und komponentenweise Addition gebildet wird (Fig. 9).

8. Anwendung nach Anspruch 7 bei einem Direktumrichter zur Speisung einer unsymmetrischen Last mit paralleler Symmetriereinrichtung, dadurch gekennzeichnet, dass sowohl die Ausgangsspannungen ($\underline{U}$) des Direktumrichters gemessen und das Spannungsgrundschwingungs-Gegensystem unterdrückt wie die Ausgangsströme ($\underline{i}$) gemessen und das Strom-Oberschwingungssystem unterdrückt wird und dass in der Umrichtersteuerung das Winkelsignal ($\varphi^*$) dadurch gebildet wird (Fig. 10), dass ein zur zusätzlich gemessenen Lastspannung ($U_{12}$) gehörender Lastspannungs-Istwertvektor gebildet wird, dass entsprechend vorgegebenen Sollwerten ($i^*_W$, $i^*_B$) für den in die Last einzuspeisenden Wirk- und Blindstrom eine Soll-Winkeldifferenz, ($\Delta\varphi^*$) zwischen dem Lastspannungs-Grundschwingungssystem und dem Umrichterausgangsspannungs-Grundschwingungssystem gebildet wird, dass der Lastspannungs-Istwertvektor ins Koordinaten-Mitsystem transformiert (32) und seine transformierten Komponenten gemittelt (133', 133'') werden, und dass die Frequenz ($\omega^*$) des Winkelsignals ($\varphi^*$) solange nachgestellt wird, bis die Richtung des durch die gemittelten, ins Koordinaten-Mitsystem transformierten Komponenten des Lastspannungs-Istwertvektors im Koordinaten-Mitsystem dargestellten Lastspannungs-Grundschwingungsvektors mit der Soll-Winkeldifferenz übereinstimmt.

9. Anwendung nach Anspruch 8, dadurch gekennzeichnet, dass entsprechend den Wirk- und Blindstromsollwerten auch eine Soll-Amplitudendifferenz zwischen dem Lastspannungs-Grundschwingungssystem und dem Umrichterausgangsspannungs-Grundsystem gebildet wird, dass die Sollamplitudendifferenz und eine Koordinaten-Mitsystem-Komponente des Lastspannungs-Grundsystemvektors zur Spannungs-Sollamplitude ($U^*$) für das Umrichterausgangsspannungs-Grundschwingungssystem zusammengesetzt wird und dass dem durch die Spannungs-Sollamplitude und das Winkelsignal gebildeten Spannungssollsystem die Korrekturgrössen zur Unterdrückung des Spannungsgrundschwingungs-Gegensystem und zur Unterdrückung des Strom-Oberschwingungssystems überlagert werden (Fig. 10).

10. Vorrichtung zum Unterdrücken eines Gegensystems in den Ausgangsgrössen eines mehrphasigen Stellgliedes, gekennzeichnet durch

a) Mittel (91) zur Bildung eines aus der Stellgliedsteuerung abgeleiteten Winkelsignals ($\underline{\varphi}^*$), das in einem raumfesten Bezugssystem eine Koordinatenachse eines mit einem vorgegebenen Vielfachen der Stellgliedsteuerung vorgegebenen Grundfrequenz ($\omega^*$) rotierenden Koordinaten-Gegensystems bestimmt,

b) eine erste Vektordreherstufe (32''), die die durch eine Zuordnungsschaltung gewinnbaren Komponenten eines dem nullkomponentenfreien Messwertsystem ($U_1$, $U_2$, $U_3$) zugeordneten Istwert-Vektors ($\underline{U}$) durch Demodulation mit dem Winkelsignal in die Komponenten des Istwertvektors im Koordinaten-Gegensystem transformiert,

c) eine Filter- und Reglerstufe (33'', 97, 96), die aus der Regelabweichung der zeitlichen Mittelwerte der transformierten Vektorkomponenten die auf das Koordinaten-Gegensystem bezogenen Komponenten eines Korrekturvektors bildet, und

d) eine zweite Vektordreherstufe (34''), die die Komponenten des Korrekturvektors mittels des Winkelsignals in raumfeste Komponenten rückmoduliert, die einem Steuervektor ($\underline{U}^*$) für die Steuerung des Stellgliedes in kompensatorischem Sinn aufgeschaltet werden (Fig. 4).

11. Vorrichtung nach Anspruch 10, dadurch gekennzeichnet, dass die erste Vektordreherstufe (32) einen ersten, dem Gegensystem zugeordneten Vektordreher (32''), der die raumfesten Komponenten des Messwert-Vektors ($\underline{i} = i_\alpha$, $i_\beta$) in seine kartesischen Komponenten bezüglich des Koordinaten-Gegensystems ($i_{\alpha''}$, $i_{\beta''}$) umrechnet, und einen ersten, einem gegensinnig zum Koordinaten-Gegensystem umlaufenden orthogonalen Koordinaten-Mitsystem zugeordneten Vektordreher (32') enthält, der die raumfeste Komponente ($\underline{i}$) des Istwert-Vektors in seine Komponenten ($i_{\alpha'}$, $i_{\beta'}$) bezüglich des Koordinaten-Mitsystems umrechnet, dass die Filterstufe (33) für jede Komponente des Istwert-Vektors bezüglich des Koordinaten-Mitsystems und des Koordinaten-Gegensystems je einen Regler (83, 84) mit Istwert-Glättung zur Bildung der Regelabweichung zwischen den das Mitsystem und das Gegensystem beschreibenden zeitlichen Mittelwerten dieser Komponenten und vorgegebenen Sollwerten enthält, und dass die zweite Vektordreherstufe (34) je einen zweiten, dem Gegen- und dem Mitsystem zugeordneten Vektordreher enthält, die den aus Reglerausgangsgrössen die raumfesten Komponenten eines Korrekturvektors zum Unterdrücken des Gegensystems und des Mitsystems bilden, sowie ein Additionsglied (37) zur komponentenweisen Addition des Korrektur-Vektors und eines das Stellglied steuernden Steuer-Vektors enthält (Fig. 8).

12. Vorrichtung nach Anspruch 10 oder 11, dadurch gekennzeichnet, dass zumindest dem ersten dem Gegensystem zugeordneten Vektordreher (32'') ein Subtraktionsglied (41) vorgeschaltet ist zur komponentenweisen Subtraktion eines das Messwert-Mitsystem oder das Messwert-Grundschwingungssystem oder das System der Stellglied-Sollwerte beschreibenden Vektors ($\underline{i'}$) vom Istwert-Vektor ($\underline{i}$) (Fig. 6).

13. Vorrichtung nach einem der Ansprüche 10 bis 12, dadurch gekennzeichnet, dass die Mittel zur Bildung des Winkelsignals zwei hintereinandergeschaltete Vektordreher (70, 71) enthalten, wobei die Komponenten eines aus den Führungsgrössen abgeleiteten, synchron mit dem Grund-

schwingungs-Mitsystem umlaufenden Einheits-Vektors ($\varphi^*$) sowohl dem Vektoreingang des vorderen Vektordrehers (70) als auch den Winkelsignaleingängen beider Vektordreher (70, 71) zugeführt ist (Fig. 8).

14. Vorrichtung nach einem der Ansprüche 8 bis 13, dadurch gekennzeichnet, dass die Filterstufe zwischen je einem Filter oder Integrator zur Glättung eines Istwertes und einem entsprechenden Nullpunktregler eine Einrichtung (86, 86') enthält, die den durch die Glättung gebildeten Mitsystem-Vektor und den Gegensystem-Vektor jeweils um 90° dreht (Fig. 8).

15. Vorrichtung nach Anspruch 11, dadurch gekennzeichnet, dass das Winkelsignal ($\underline{\Phi}^{3*}$) zusätzlich einem weiteren Vektordreher ($\overline{87}$) zugeführt ist, dessen Winkelsignaleingang von einem fest vorgegebenen Signal beaufschlagt und dessen Ausgangssignale den Korrekturgrössen überlagert ist (Fig. 8).

16. Schaltungsanordnung mit einem Drehstrom-Drehstrom-Direktumrichter zur Speisung einer zweiphasigen Last mit folgenden Merkmalen (Fig. 1)

a) an die Umrichterausgänge (1, 2, 3) ist eine der Last (4) parallele elektronische Symmetriereinrichtung (60) angeschlossen, die bei einem symmetrischen System von Umrichter-Ausgangsspannungen ein symmetrisches System von Ausgangsströmen erzeugt,

b) eine Regeleinrichtung (6, 9) bildet aus einem Führungsgrössensystem vorgegebener Sollfrequenz und einem Messwertsystem für die Ströme und/oder Spannungen an den Umrichterausgängen ein Stellgrössensystem zum Erzeugen eines symmetrischen Systems von Umrichter-Ausgangsspannungen, und

c) eine Umschalteinrichtung (10), der ein aus dem Strommesswertsystem abgeleitetes Umsteuersignal zugeführt ist, schaltet die auf den jeweiligen Umrichterausgang arbeitenden, antiparallelen Gleichrichterbrücken jeweils beim Nulldurchgang der Grundschwingung des betreffenden Ausgangsstromes um, gekennzeichnet durch folgende Merkmale der Regeleinrichtung:

d) ein Steuergrössengeber (100) ermittelt aus der Lastspannung ($U_{12}$) als Führungsgrösse ein mit gleicher Frequenz veränderliches Winkelsignal ($\varphi^*$) und ein dem einzuspeisenden Laststrom ($i_w^*$, $i_B^*$) entsprechendes Steuersignal ($\underline{i}^*$) durch die ein Steuervektor des Direktumrichters festgelegt wird,

e) Das Umsteuersignal ($\overline{i}$) wird von einer die Grundschwingung der Ausgangsströme ermittelnden Einrichtung (50) gebildet, die den Strom-Istwertvektor in ein mit dem Winkelsignal rotierendes Koordinaten-Mit- und Gegensystem transformiert, durch Glättung den Mit- und Gegensystem-Stromvektor bildet, beide Vektoren rücktransformiert und zu dem Grundschwingungssystem der Ausgangsströme zusammensetzt,

f) eine Vorrichtung (80) nach Anspruch 11 bildet aus dem Strommesswertsystem und einem mit der dreifachen Frequenz des Steuervektors rotierenden Winkelsignal einen Zusatzvektor zur Unterdrückung des Stromoberschwingungssystems dritter Ordnung, der dem Steuervektor überlagert wird,

g) eine Vorrichtung (90) nach Anspruch 10 bildet aus den Spannungsmesswerten und dem den Steuervektor bestimmenden Winkelsignal einen zweiten Korrekturvektor, der zur Unterdrückung des Ausgangsspannungsgrundschwingungs-Gegensystem dem Steuervektor überlagert wird (Fig. 9).

17. Vorrichtung nach Anspruch 16, dadurch gekennzeichnet, dass der Steuergrössengeber aus Sollwerten für den einzuspeisenden Lastwirkstrom und Lastblindstrom und aus der gemessenen Lastspannung als einen ersten Steuervektor ($\underline{U}^*$) einen durch das lastspannungsfrequente Winkelsignal und einen Spannungsamplitudensollwert festgelegten Spannungsgrundschwingungs-Sollvektor bildet, zu dem der Zusatzvektor zur Stromoberschwingungsunterdrückung und der Korrekturvektor zur Spannungsgegensystemunterdrückung addiert sind, und als einen zweiten Steuervektor einen bezüglich der Amplitude durch den Laststromsollwert und bezüglich der Phase durch das Winkelsignal gegebenen Stromgrundschwingungs-Sollvektor bildet, dass die die Stromgrundschwingung ermittelnde Einrichtung den im Strommesswertsystem enthaltenen Grundschwingungs-Mitsystemvektor als Istwert für eine auf den Stromgrundschwingungs-Sollvektor einregelnde Stromregelung bildet, und dass das durch den ersten Steuervektor gegebene Steuergrössensystem dem von der Stromregelung gelieferten Steuergrössensystem entweder zur Spannungsvorsteuerung unmittelbar oder mittels einer unterlagerter Spannungsregelung aufgeschaltet wird.

**Claims**

1. A method of suppressing a counter-system in the initial magnitudes of a multi-phase setting element, characterised by the following features:

a) an angular signal ($\underline{\varphi}^*$) is formed whose frequency is modified by a predetermined multiple of the fundamental oscillation and which determines in a stationary reference system a coordinate axis of a coordinate counter-system which rotates in opposition to the sense of rotation of the fundamental oscillation system;

b) the components of an actual value vector ($\underline{U}$) assigned to the system of the measured values free from zero components, are formed and transformed into the components ($U_{\alpha''}$, $U_{\beta''}$) of the actual value vector in the coordinate counter-system by demodulation by the angular signal ($\underline{\varphi}^*$) (vector rotator 32″);

c) the components of a correction vector in relation to the coordinate counter-system are formed from the regulating deviation (comparison point 97) of the average values (filter 33″) of the transformed vector components from the theoretical zero values; and

d) by means of a redemodulation via the angular signal (vector rotator 34″) the correction vector is retransported into the stationary reference system and superimposed on a control vector for the control of the setting element as a compensation (Fig. 4).

2. A method as claimed in Claim 1, characterised in that the angular signal for the setting element is tapped at the control unit in accordance with the frequency of the control vector (Fig. 3).

3. A method as claimed in Claim 1 or 2, characterised in that the orthogonal Cartesian components of the transformed actual value vector are formed during the transformation (Fig. 4).

4. A method as claimed in one of Claims 1 to 3, characterised in that the stationary components of the actual value vector are equally transformed into the components $(i_\alpha{}', i_\beta{}')$ of the actual vector through demodulation by the angular signal $(\varphi^{3*})$ in a coordinate co-system which rotates at the same frequency but in opposition to the coordinate counter-system (vector rotator stage 32), that the components of a further correction vector relative to the coordinate counter-system are equally formed from the regulating deviation (regulator 83, 84) of the time-related average values (filter stage 33) of the vector components in the coordinate co-system from the theroretical zero values, that an additional vector which corresponds to the vector sum (addition element 37) of the two correction vectors (vector rotator stage 34) which are retransformed into the stationary reference system, are formed and compensatorily superimposed on the control vector $(i_s)$, (Fig. 8).

5. A method as claimed in one of Claims 1 to 4, characterised in that the time-related average values of the components of the actual value vector transformed into the coordinate counter-system are formed in that the components of the vectorial difference $(i-\bar{i}')$ between an actual vector $(i)$ and a vector $(i')$ which describes the co-system, or a vector $(i^*)$ which describes the system of the theoretical values related to the coordinate counter-system are averaged. (Fig. 6).

6. A method as claimed in one of Claims 1 to 5, characterised in that the regulating deviations are respectively supplied to a zero point regulator and the output signals of the zero point regulators are subjected to the retransformation and superimposed as correction magnitudes upon the guide magnitude or a setting magnitude, which is derived from the guide magnitude. (Fig. 8).

7. Use of the method as claimed in one of Claims 1 to 6 for suppressing a fundamental oscillation counter-system (interpretation device 90, superimposition 111) or a harmonic system (interpretation 89, superimposition 112) in a direct inverter, wherein change-overs dependent upon the flow direction of the current are effected between anti-parallel inverter bridges in accordance with the zero transits of the fundamental oscillation system of the measured values $(i)$ of the current, and the current fundamental oscillation system is interpreted by a current fundamental oscillation vector $(i)$ formed by transformation of the actual value vector of the measured values of the current into the coordinate counter-system free from zero components, and into the coordinate co-system, averaging of the transformed vector components, retransformation into the stationary reference system and componentwise addition. (Fig. 9).

8. Use as claimed in Claim 7, in a direct inverter for feeding an unsymmetrical load with parallel symmetrization device, characterised in that both the output voltages $(U)$ of the direct inverter are measured and the voltage fundamental oscillation counter-system is suppressed, and the output currents $(i)$ are measured and the current harmonic system is suppressed, and that in the inverter control unit the angular signal $(\varphi^*)$ is formed (Fig. 12) in that a load voltage actual value vector assigned to the additionally measured load voltage $(U_{12})$ is formed, that in accordance with the predetermined theoretical values $(i^*{}_W, i^*{}_B)$ for the active and idle current to be fed into the load, a theoretical angular difference $(\Delta\varphi^*)$ between the load voltage fundamental oscillation system and the fundamental oscillation system of the inverter output voltage is formed, that the actual value vector of the load voltage is transformed (32) into the coordinate co-system and its transformed components are averaged (133′, 133″), and that the frequency $(\omega^*)$ of the angular signal $(\varphi^*)$ is adjusted until the direction of the fundamental oscillation vector of the load voltage, represented by the averaged components of the actual value vector of the load voltage in the coordinate co-system, corresponds to the theoretical angular difference.

9. Use as claimed in Claim 8, characterised in that in accordance with the theoretical values of active and idle current a theoretical amplitude difference is formed between the fundamental oscillation system of the load voltage and the fundamental system of the inverter output voltage, that the theoretical amplitude difference and a coordinate co-system component of the fundamental system vector of the load voltage are combined for the voltage theoretical amplitude $(U^*)$ for the inverter output voltage fundamental oscillation system, and that the voltage theoretical system formed by the voltage theoretical amplitude and the angular signal is superimposed by the correction magnitudes for the suppression of the counter-system of the voltage fundamental oscillation and for the suppression of the harmonic system of the current. (Fig. 10).

10. A device for the suppression of a counter-system in the output magnitudes of a multiphase setting element, characterised by:

a) means (91) for forming an angular signal $(\varphi^*)$ derived from the setting element control unit, which in a stationary reference system determines a coordinate axis of a coordinate counter-system which rotates by means of a predetermined multiple of the fundamental frequency

($\omega^*$) determined for the setting element control unit;

b) a first vector rotator stage (32″) which transforms the components, obtained by means of an allocation circuit, of an actual value vector ($\underline{U}$) allocated to the measured value system ($U_1$, $U_2$, $U_3$) free from zero components, into the components of the actual value vector in the coordinate counter-system through demodulation by the angular signal;

c) a filter stage and regulator stage (33″, 97, 96) which forms the components of a correction vector related to the coordinate counter-system, from the regulation deviation of the time-related average values of the transformed vector components; and

d) a second vector rotator stage (34″) which remodulates the components of the correction vector by means of the angular signal into stationary components superimposed onto a control vector ($\underline{U}$″) for the control of the setting element in the compensatory sense. (Fig. 6).

11. A device as claimed in Claim 10, characterised in that the first vector rotator stage (32) comprises a first vector rotator (32″) allocated to the counter-system and transforms the stationary components of the measured value vector ($\underline{i} = i_\alpha$, $i_\beta$) into its Cartesian components in relation to the coordinate counter-system ($i_{\alpha''}$, $i_{\beta''}$), and comprises a first vector rotator (32′) allocated to an orthogonal coordinate co-system rotating in opposition to the coordinate counter-system, and which vector rotator changes the stationary components (i) of the actual value vector into its components ($i_{\alpha'}$, $i_{\beta'}$) relative to the coordinate co-system; that for each component of the actual value vector relative to the coordinate co-system and of the coordinate counter-system the filter stage (33) respectively comprises a regulator (83, 84) with actual value smoothing for the formation of the regulation deviation between the time-related average values of these components, which describe the co-system and the counter-system, and predetermined theoretical values; and that the second vector rotator stage (34) respectively comprises a second vector rotator assigned to the counter and co-system and forms from regulator output magnitudes the stationary components of a correction vector for the suppression of the counter-system and the co-system, and comprises an addition element (37) for the component-wise addition of the correction vector and a control vector which controls the setting element. (Fig. 8).

12. A device as claimed in Claim 10 or 11, characterised in that at least the first vector rotator (32″) allocated to the counter-system is preceded by a subtraction element (41) for the component-wise subtraction from the actual value vector ($\underline{i}$) of a vector ($\overline{i'}$) which describes the measured value co-system or the measured value fundamental oscillation system or the system of the setting element theoretical values. (Fig. 6).

13. A device as claimed in one of Claims 10 to 12, characterised in that the means for the formation of the angular signal comprise two consecutively switched vector rotators (70, 71), where the components of a unit vector ($\underline{\varphi}^*$) derived from the guide magnitudes and rotating synchronously with the fundamental oscillation co-system is supplied both to the vector input of the front vector rotator (70) and also to the angular signal input of the two vector rotators (70, 71) (Fig. 8).

14. A device as claimed in one of Claims 8 to 13, characterised in that the filter stage comprises, between a filter or integrator for smoothing an actual value and a corresponding zero point regulator, a device (86, 86′) which respectively rotates the co-system vector formed as a result of the smoothing and the counter-system vector by 90°. (Fig. 8).

15. A device as claimed in Claim 11, characterised in that the angular signal ($\underline{\Phi}^{3*}$) is additionally fed to a further vector rotator (87) whose angular signal input is acted upon by a firmly determined signal whose output signals are superimposed on the correction magnitudes. (Fig. 8).

16. A circuit arrangement with a three-phase/three-phase direct inverter for feeding a two-phase load, having the following features (Fig. 1):

a) an electronic symmetrization device (60) parallel to the load connected to the inverter outputs (1, 2, 3), produces a symmetrical system of output currents in a symmetrical system of inverter output voltages;

b) a regulating device (6, 9) forms a setting magnitude system for producing a symmetrical system of inverter output voltages from a guide magnitude system of predetermined theoretical frequency and a measured value system for the currents and/or voltages at the inverter outputs; and

c) a change-over device (10), to which a change-over signal derived from the current measured value system is supplied, changes over the antiparallel rectifier bridges, which operate on the respective inverter output, in the event of a zero transit of the fundamental oscillation of the respective output current; characterised by the following features of the regulating device:

d) a control magnitude generator (100) determines an angular signal ($\varphi^*$), modifiable with constant frequency from the load voltage ($U_{12}$) as a guide magnitude and a control signal ($\underline{i}^*$) corresponding to the load current ($i_W^*$, $i_B^*$) to be supplied, from which signals a control vector of the direct inverter is determined;

e) the change-over signal ($\underline{i}$) is formed by a device (50) which ascertains the fundamental oscillations of the output currents, and transforms the current actual value vector into a coordinate co-system and counter-system rotating with the angular signal, and forms the co-system and counter-system current vector by smoothing, retransforms both vectors, and combines them to form the fundamental oscillation system of the output currents;

f) a device (8) in accordance with Claim 11 forms an additional vector from the current measured value system and an angular signal which rotates with the three-fold frequency of the control vector which serves to suppress the current harmonic system of the third order and is superimposed on the control vector; and

g) a device (90) as claimed in Claim 10 forms a second correction vector from the voltage measured values and the angular signal which determines the control vector which is superimposed upon the control vector for the suppression of the output voltage fundamental oscillation counter-system.

17. A device as claimed in Claim 16, characterised in that the control magnitude generator forms as a first control vector ($\underline{U}^*$) a voltage fundamental oscillation theoretical vector determined by the load-voltage-frequency angular signal and a voltage amplitude theoretical value, from theoretical values for the active load current and idle load current which is to be fed in, and from the measured load voltage, to which voltage fundamental oscillation theoretical vector the additional vector for the suppression of the voltage counter-system and the correction vector for the suppression of the voltage counter-system are added, and forms a current fundamental oscillation theoretical vector as a second control vector, which is given by the load current theoretical value in relation to the amplitude and by the angular signal in relation to the phase, that the device which determines the current fundamental oscillation forms the fundamental oscillation co-system vector, which is included in the current measured system, as an actual value for a current regulation unit regulating to the current fundamental oscillation theoretical vector, and that the control magnitude system represented by the first control vector is superimposed on the control magnitude system supplied by the current regulating unit, either directly or by means of an underlying voltage regulating unit for the preliminary voltage control.

**Revendications**

1. Procédé pour supprimer un système inverse dans les grandeurs de sortie d'un organe de réglage polyphasé, caractérisé par les particularités suivantes:

a) on forme un signal angulaire ($\underline{\varphi}^*$), dont la fréquence est variable conformément à un multiple prédéterminé de l'oscillation fondamentale et qui détermine, dans un système de référence fixe dans l'espace, un axe de coordonnées d'un système inverse de coordonnées tournant en sens opposé par rapport au sens de rotation du système de l'oscillation fondamentale,

b) on forme les composantes d'un vecteur de la valeur réelle ($\underline{U}$) associé au système sans composante nulle des valeurs de mesure dans le système de référence fixe dans l'espace et on les transforme, par démodulation avec le système angulaire ($\underline{\varphi}^*$), en les composantes $U_{\alpha'}$, $U_{\beta'}$) du vecteur de la valeur réelle dans le système inverse de coordonnées (dispositif de rotation vectorielle 32″),

c) à partir de l'écart de réglage (point de comparaison 97) des valeurs moyennes (filtre 33″) des composantes vectorielles transformées, par rapport aux valeurs de consignes nulles, on forme les composantes d'un vecteur de correction par rapport au système inverse de coordonnées, et

d) par modulation inverse avec le signal angulaire (dispositif de rotation vectorielle 34″), on transforme de façon inverse le vecteur de correction dans le système de référence fixe dans l'espace et on l'ajoute de façon compensatoire à un vecteur de commande servant à réaliser la commande de l'organe de réglage (figure 4).

2. Procédé suivant la revendication 1, caractérisé par le fait que le signal angulaire est prélevé conformément à la fréquence du vecteur de commande, dans le dispositif de commande de l'organe de réglage (figure 3).

3. Procédé suivant la revendication 1 ou 2, caractérisé par le fait que les composantes cartésiennes orthogonales du vecteur de la valeur réelle, transformé, sont formées (figure 4).

4. Procédé suivant l'une des revendications 1 à 3, caractérisé par le fait que les composantes, fixes dans l'espace, du vecteur de la valeur réelle sont transformées également par démodulation avec le signal angulaire ($\varphi^{3*}$) en les composantes ($i_{\alpha'}$, $i_{\beta'}$) du vecteur réel dans un système direct de coordonnées tournant avec la même fréquence, mais en sens opposé par rapport au système inverse de coordonnées (étage de rotation vectorielle (32), qu'à partir de l'écart de réglage (régulateur 83, 84) des valeurs moyennes dans le temps (étage de filtres 33) des composantes vectorielles dans le système direct de coordonnées par rapport aux valeurs de consigne nulles, on forme des composantes d'un autre vecteur de correction par rapport au système inverse de coordonnées, qu'on forme un vecteur supplémentaire correspondant à la somme vectorielle (circuit additionneur 37) des deux vecteurs de correction (étage de rotation vectorielle 34) transformés en retour dans le système de référence fixe dans l'espace (figure 8).

5. Procédé suivant l'une des revendications 1 à 4, caractérisé par le fait qu'on forme les valeurs moyennes dans le temps des composantes du vecteur de la valeur réelle, transformé dans le système inverse de coordonnées, en déterminant les composantes, rapportées au système inverse de coordonnées, de la différence vectorielle ($\underline{i}-\underline{i}'$) entre le vecteur réel ($\underline{i}$) et un vecteur ($\underline{i}'$) décrivant le système direct ou un vecteur ($\underline{i}^*$) décrivant le système des valeurs de consigne (figure 6).

6. Procédé suivant l'une des revendications 1 à 5, caractérisé par le fait que les écarts de réglage sont envoyés respectivement à un régulateur du zéro et que les signaux de sortie du régulateur du zéro sont soumis à la transformation inverse et sont ajoutés, en tant que grandeurs de correction, à la grandeur pilote ou à une grandeur de réglage dérivée de la grandeur pilote (figure 8).

7. Application du procédé suivant l'une des revendications 1 à 6 pour supprimer un système inverse de l'oscillation fondamentale (dispositif de détection 90, circuit de sommation 111) ou d'un système d'oscillations harmoniques (dispositif de détection 80, circuit additionneur 111) dans un convertisseur direct, dans lequel des commutations dépendant du sens du passage du courant sont réalisées entre des ponts antiparallèles du convertisseur, conformément aux annulations du système de l'oscillation fondamentale des valeurs de mesure du courant (i) et le système de l'oscillation fondamentale du courant est déterminé par un vecteur (i̲) de l'oscillation fondamentale du courant, qui est formé par transformation du vecteur de la valeur réelle, exempt de composante nulle, des valeurs de mesure du courant dans le système inverse de coordonnées et dans le système direct de coordonnées, formation de la moyenne des composantes vectorielles transformées, transformation inverse dans le système de référence fixe dans l'espace et addition compensatoire (figure 9).

8. Application suivant la revendication 7, dans le cas d'un redresseur direct servant à réaliser l'alimentation d'une charge dissymétrique comportant un dispositif de symétrisation volontaire parallèle, caractérisé par le fait qu'aussi bien on mesure les tensions de sortie (U̲) du convertisseur direct et on supprime le système inverse de l'oscillation fondamentale de tension, et l'on mesure les courants de sortie (i̲) et on supprime le système d'oscillations harmoniques du courant, et que le signal angulaire ($\varphi^*$) est formé dans le dispositif de commande du convertisseur (figure 10), qu'on forme un vecteur de la valeur réelle de la tension de charge associé à la tension de charge ($U_{12}$) mesurée en supplément, que, conformément à des valeurs de consigne prédéterminées ($i_w^*$, $i_B^*$) pour le courant actif et le courant réactif devant être injectés dans la charge, on forme une différence angulaire de consigne ($\Delta\varphi^*$) entre le système de l'oscillation fondamentale de la tension de sortie du convertisseur, qu'on transforme (32) le vecteur de la valeur réelle de la tension de charge dans le système direct de coordonnées et qu'on forme la moyenne (133', 133'') de ces composantes transformées, et qu'on réalise le réglage de la fréquence ($\omega^*$) du signal angulaire ($\varphi^*$) jusqu'à ce que la direction du vecteur de l'oscillation fondamentale de la tension de charge, qui est représentée par les composantes moyennes, transformées dans le système direct de coordonnées, du vecteur de la valeur réelle de la tension de charge dans le système direct de coordonnées, coïncide avec la différence angulaire de consigne.

9. Application selon la revendication 8, caractérisée par le fait que conformément aux valeurs de consigne du courant actif et du courant réactif, on forme également une différence d'amplitude de consigne entre le système de l'oscillation fondamentale de la tension de charge et le système de l'oscillation fondamentale de la tension de sortie du convertisseur, qu'on réunit la différence des amplitudes de consigne et une composante, dans le système direct de coordonnées, du vecteur du système de l'oscillation fondamentale de la tension de charge pour obtenir l'amplitude de consigne ($U^*$) de la tension pour le système de l'oscillation fondamentale de la tension de sortie du convertisseur, et qu'on superpose au système de consigne de la tension formée par l'amplitude de consigne de la tension et le signal angulaire, les grandeurs de correction pour supprimer le système inverse de l'oscillation fondamentale de la tension et pour supprimer le système d'oscillations harmoniques du courant (figure 10).

10. Dispositif pour supprimer un système inverse dans les grandeurs de sortie d'un organe de réglage polyphasé, caractérisé par:

a) des moyens (91) pour former un signal angulaire ($\varphi^*$) dérivé du dispositif de commande de l'organe de réglage et qui détermine, dans un système de coordonnées fixe dans l'espace, un axe de coordonnées d'un système inverse de coordonnées tournant conformément à un multiple prédéterminé de la fréquence fondamentale ($\omega^*$) prédéterminée pour le dispositif de commande de l'organe de réglage,

b) un premier organe de rotation vectorielle (32*), qui transforme les composantes, pouvant être obtenues au moyen d'un circuit d'affectation, d'un vecteur de la valeur réelle (U̲) associé au système de valeurs de mesure ($U_1$, $U_2$, $U_3$) exempt de composante nulle, par démodulation au moyen du signal angulaire, en les composantes du vecteur de la valeur réelle dans le système inverse de coordonnées,

c) un étage formant filtre régulateur (33'', 97, 96), qui forme, à partir de l'écart de réglage des valeurs moyennes dans le temps des composantes transformées du vecteur, des composantes d'un vecteur de correction, rapportées au système inverse de coordonnées, et

d) un second étage de rotation vectorielle (34'') qui module en inverse les composantes du vecteur de correction à l'aide du signal angulaire des composantes fixes dans l'espace qui sont additionnées, de manière à avoir un effet compensatoire, à un vecteur de commande (U̲'') utilisé pour la commande de l'organe de réglage (figure 4).

11. Dispositif suivant la revendication 10, caractérisé par le fait que le premier étage de rotation vectorielle (32) contient un premier dispositif de rotation vectorielle (32''), qui est associé au système inverse et qui convertit les composantes, fixes dans l'espace, du vecteur de la valeur de mesure ($i̲ = i_\alpha$, $i_\beta$) en ses composantes cartésiennes par rapport au système inverse de coordonnées ($i_{\alpha''}$, $i_{\beta''}$) et un premier dispositif de rotation vectorielle (32'') associé à un système orthogonal direct de coordonnées tournant en sens inverse du système inverse de coordonnées et qui convertit les composantes (i̲) fixes dans l'espace, du vecteur de la vitesse réelle en ses composantes ($i_{\alpha'}$, $i_{\beta'}$) par rapport au système direct de coordonnées, que l'étage formant filtre (33) contient, pour chaque composante du vecteur de la valeur réelle par rapport au système direct de coordonnées et par rapport au système inverse de coordonnées, un régulateur respectif (83, 84) comportant un circuit de filtrage de la valeur réelle en vue de former l'écart de réglage entre les valeurs moyennes dans le temps, décrivant le système direct et le système inverse, de ces composantes et des valeurs de consigne prédéterminées, et que le second étage de rotation vectorielle (34) contient des seconds dispositifs de rotation vectorielle respectifs associés au système inverse et au système direct et qui forment, à partir des grandeurs de sortie du régulateur, les composantes, fixes dans l'espace, d'un vecteur de correction pour supprimer le système inverse et le système direct, ainsi qu'un circuit additionneur (37) servant à réaliser l'addition compensatoire du vecteur de correction et d'un vecteur de commande commandant l'organe de réglage (figure 8).

12. Dispositif suivant la revendication 10 ou 11, caractérisé par le fait qu'au moins en amont du premier dispositif de rotation vectorielle (32″) associé au système inverse se trouve branché un circuit soustracteur (41) pour réaliser la soustraction compensatoire d'un vecteur ($\overline{i'}$), qui décrit le système direct de la valeur de mesure ou le système de l'oscillation fondamentale de la valeur de mesure ou le système des valeurs de consigne de l'organe de réglage, du vecteur de la valeur réelle ($\underline{i}$) (figure 6).

13. Dispositif suivant l'une des revendications 10 à 12, caractérisé par le fait que les moyens servant à former le signal angulaire contiennent deux dispositifs de rotation vectorielle (70, 71) branchés en série, les composantes d'un vecteur unité ($\underline{\varphi}^*$), qui est dérivé des grandeurs pilotes et tourne en synchronisme avec le système direct de l'oscillation fondamentale, sont envoyées aussi bien à l'entrée vectorielle du dispositif de rotation vectorielle amont (70) qu'aux sorties des signaux angulaires des deux dispositifs de rotation vectorielle (70, 71).

14. Dispositif suivant l'une des revendications 8 à 13, caractérisé par le fait que l'étage formant filtre contient, entre respectivement un filtre ou un intégrateur servant à filtrer la valeur réelle et un régulateur de zéro correspondant, un dispositif (86, 86′) qui fait pivoter respectivement de 90° le vecteur du système direct, formé par filtrage, et le vecteur du système inverse (figure 8).

15. Dispositif suivant la revendication 11, caractérisé par le fait que le signal angulaire ($\underline{\Phi}^{3*}$) est envoyé en outre à un autre dispositif de rotation vectorielle (87), dont l'entrée du signal angulaire est chargée par un signal prédéterminé de façon fixe et dont les signaux de sortie sont superposés aux grandeurs de correction (figure 8).

16. Montage comportant un convertisseur direct triphasé-triphasé pour l'alimentation d'une charge biphasée, présentant les caractéristiques suivantes (figure 1)

a) aux sorties (1, 2, 3) du convertisseur se trouve raccordé un dispositif électronique de symétrisation (60) parallèle à la charge (4) qui produit un système symétrique de courant de sortie, dans le cas d'un système symétrique de tension de sortie du convertisseur,

b) un dispositif de réglage (6, 9) forme, à partir d'un système de grandeurs pilotes possédant une fréquence de consigne prédéterminée et à partir d'un système de valeurs de mesure pour les courants et/ou les tensions présents sur les sorties du convertisseur, un système de grandeurs de réglage servant à produire un système symétrique de tensions de sortie du convertisseur, et

c) un dispositif de commutation (10) auquel est envoyé un signal d'inversion de commande dérivé du système de valeurs de mesure du courant, réalise une inversion de la commande des ponts redresseurs antiparallèles, opérant au niveau des sorties respectives du convertisseur, respectivement lors de l'annulation de l'oscillation fondamentale du courant de sortie considéré, caractérisé par les particularités suivantes du dispositif de réglage:

d) un transmetteur (100) des grandeurs de commande détermine, à partir de la tension de charge ($U_{12}$) servant de grandeur pilote, un signal angulaire ($\varphi^*$) variable avec une fréquence constante, et un signal de commande ($\underline{i}''$) correspondant au courant de charge ($I_w^*$, $i_B^*$) devant être injecté, est déterminé par un vecteur de commande du convertisseur direct,

e) le signal d'inversion de commande ($\overline{i}$) est formé par un dispositif (50) déterminant l'oscillation fondamentale des courants de sortie et qui transforme le vecteur de valeurs réelles du courant en un système direct de coordonnées et en un système inverse de coordonnées, tournant avec le signal angulaire, forme par lissage le vecteur de courant du système direct et du système inverse, effectue la transformation inverse des deux vecteurs et les réunit pour former le système de l'oscillation fondamentale des courants de sortie,

f) un dispositif (80) conforme à la revendication 11 forme, à partir du système des valeurs de mesure du courant et d'un signal angulaire tournant avec une fréquence triple de celle du vecteur de commande, un vecteur supplémentaire pour supprimer le système de l'oscillation harmonique du courant du troisième ordre, qui est superposé au vecteur de commande,

g) un dispositif (90) selon la revendication 10 forme, à partir des valeurs de mesure de la tension et du signal angulaire déterminant le vecteur de commande, un second vecteur de correction qui est superposé au vecteur de commande pour réaliser la suppression du système inverse de l'oscillation fondamentale de la tension de sortie (figure 9).

17. Dispositif suivant la revendication 16, caractérisé par le fait que le transmetteur de grandeurs de commande forme, en tant que premier vecteur de commande ($\underline{U}^*$), à partir des valeurs de consigne du courant actif et du courant réactif de charge devant être injectés et à partir de la tension de charge mesurée, un vecteur de consigne de l'oscillation fondamentale de la tension, déterminé par le signal angulaire possédant la fréquence de la tension de charge et par une valeur de consigne de l'amplitude de tension, et auxquels sont ajoutés le vecteur supplémentaire servant à supprimer l'oscillation harmonique du courant et le vecteur de correction servant à supprimer le système inverse de tension, et forme, en tant que second vecteur de commande, un vecteur de consigne de l'oscillation fondamentale du courant formé par la valeur de consigne du courant de charge, du point de vue de l'amplitude, et par le signal angulaire, du point de vue de la phase, que le dispositif déterminant l'oscillation fondamentale du courant, forme le vecteur du système direct de l'oscillation fondamentale, contenu dans le système de valeurs de mesure du courant, en tant que valeur réelle pour une régulation du courant se réglant en fonction du vecteur de consigne de l'oscillation fondamentale du courant, et que le système de grandeur de commande déterminé par le premier vecteur de commande est ajouté au système de grandeur de commande fourni par la régulation du courant, pour réaliser la commande préalable de la tension directement ou au moyen d'une régulation sous-jacente de la tension.

FIG 1

0 097 958

FIG 2

0 097 958

FIG 3

FIG 4

FIG 5

FIG 8

FIG 6

FIG 7

FIG 9

FIG 10